# EUROPÄISCHE PATENTSCHRIFT

(11) **EP 3 328 598 B1**
(45) Veröffentlichungstag und Bekanntmachung des Hinweises auf die Patenterteilung: **12.06.2019**
(21) Anmeldenummer: 16741301.2
(22) Anmeldetag: 19.07.2016
(51) Int. Cl.: B25J 18/00, B25J 19/06

(54) **ROBOTER MIT EINER KRAFTMESSEINRICHTUNG**
ROBOT HAVING A FORCE MEASUREMENT DEVICE
ROBOT ÉQUIPÉ D'UN DISPOSITIF DE MESURE DE FORCE

(30) Priorität: 27.07.2015 DE 102015214170
(43) Veröffentlichungstag der Anmeldung: 06.06.2018
(73) Patentinhaber: KUKA Deutschland GmbH, 86165 Augsburg (DE)
(72) Erfinder: BRUDNIOK, Sven, 86853 Langerringen (DE)
(74) Vertreter: Ege Lee & Partner Patentanwälte PartGmbB
(86) Internationale Anmeldenummer: PCT/EP2016/067213
(87) Internationale Veröffentlichungsnummer: WO 2017/016939

(56) Entgegenhaltungen:
- EP-A2- 1 353 159
- GB-A- 2 060 204
- JP-A- 2010 131 676
- JP-A- 2013 121 625
- US-A- 4 447 048
- US-A- 5 909 938
- US-A1- 2011 126 660

## Beschreibung

Die Erfindung betrifft einen Roboter, aufweisend eine Robotersteuerung, die ausgebildet und eingerichtet ist, ein Roboterprogramm auszuführen, und aufweisend einen Roboterarm mit wenigstens drei durch Glieder verbundene Gelenke, sowie aufweisend eine den wenigstens drei Gelenken entsprechende Anzahl von Antrieben, von denen jeder Antrieb zum Verstellen eines ihm zugeordneten Gelenks der wenigstens drei Gelenke ausgebildet und gemäß des Roboterprogramms automatisiert oder in einem Handfahrbetrieb durch die Robotersteuerung antreibbar ist, um das zugeordnete Gelenk automatisch zu verstellen.

Aus der US 2012/0048027 A1 ist ein Roboter bekannt, umfassend einen Arm, einen ersten Belastungssensor, der einen piezoelektrischen Körper enthält, dessen natürliche Frequenz höher ist, als die natürliche Frequenz des Strukturmaterials, aus dem der Arm ausgebildet ist, und ein oder mehrere Stellglieder, die in dem Arm vorgesehen sind, um den Arm anzutreiben, wobei eine Sensor-Fixierungsvorrichtung, die in einer Basis desjenigen Stellglieds innerhalb der Stellglieder in dem Arm vorgesehen ist, das einem Basisende des Roboterarms am nächsten ist, und wobei der erste Belastungssensor in der Sensor-Fixierungsvorrichtung vorgesehen ist.

Aus der EP 1 353 159 A2 ist ein Drehmomentsensor bekannt, in Form eines monolithischen scheibenförmigen Aufnahmeteils, bestehend aus einem kreisringförmigen Innenflansch mit ersten Krafteinleitungsstellen, aus einem kreisringförmigen Außenflansch mit zweiten Krafteinleitungsstellen und aus zwischen den beiden Flanschen ausgebildeten, radial verlaufenden Verbindungsstegen jeweils mit mechanisch geschwächtem Abschnitt, an welchem druck- oder dehnungsempfindliche, elektrische Ausgangssignale generierende Messwertaufnehmer vorgesehen sind, die nach dem Prinzip einer Wheatstone-Brücke jeweils zu Viertel-, Halb- oder Voll-Brücken in der Weise geschaltet sind, dass ein Drehmoment ermittelbar ist, dadurch gekennzeichnet, dass das Aufnahmeteil eine zusammenhängende, gegliederte, plane Oberseite aufweist, und die mechanisch geschwächten Abschnitte der Verbindungsstege als unterseitige Ausnehmungen mit jeweils einem dünnen membranartigen Abschluss ausgebildet sind, wobei auf der planen flächigen Oberseite der membranartigen Abschlüsse Messwertaufnehmer aufgebracht sind.

Die GB 2 060 204 A beschreibt einen Roboterarm mit einem Armausleger, dessen längserstreckendes Glied geteilt ausgebildet ist, wobei in der Teilungsebene eine massive Gelenkanordnung zwischengefügt ist, welche zwei quadratische Grundplatten und einen rechteckigen Rahmen aufweist, die an ihren vier Eckbereichen durch jeweils einen Verbindungsstab verbunden sind. Sowohl an dem rechteckigen Rahmen, als auch an den Verbindungsstäben sind Kraftmesssensoren angeordnet.

Aufgabe der Erfindung ist es, einen Roboter zu schaffen, bei dem der Roboterarm durch Messung von innerhalb des Roboterarms auftretenden Kräften in besonders genauer Weise positioniert werden kann.

Diese Aufgabe wird erfindungsgemäß gelöst durch einen Roboter, aufweisend eine Robotersteuerung, die ausgebildet und eingerichtet ist, ein Roboterprogramm auszuführen, und aufweisend einen Roboterarm mit wenigstens drei durch Glieder verbundene Gelenke, sowie aufweisend eine den wenigstens drei Gelenken entsprechende Anzahl von Antrieben, von denen jeder Antrieb zum Verstellen eines ihm zugeordneten Gelenks der wenigstens drei Gelenke ausgebildet und gemäß des Roboterprogramms automatisiert oder in einem Handfahrbetrieb durch die Robotersteuerung antreibbar ist, um das zugeordnete Gelenk automatisch zu verstellen, wobei wenigstens eines der Glieder aufweist:
- eine Kraftmesseinrichtung, die ausgebildet ist, eine Kraft an dem Glied in einer vorgegebenen Richtung zu messen,
- ein erstes Strukturbauteil, welches mit einem in der kinematischen Gelenkskette des Roboterarms dem Glied unmittelbar vorgelagerten Gelenk des Roboterarms verbunden ist,
- ein zweites Strukturbauteil, welches mit einem in der kinematischen Gelenkskette des Roboterarms dem Glied unmittelbar nachgelagerten Gelenk des Roboterarms verbunden ist, und
- eine das erste Strukturbauteil mit dem zweiten Strukturbauteil verbindende Lageranordnung, die ausgebildet ist, das erste Strukturbauteil mit dem zweiten Strukturbauteil lediglich unter Belassen eines einzigen Lagerfreiheitsgrades starr zu verbinden,
- wobei der einzige Lagerfreiheitsgrad ausgebildet ist, eine Beweglichkeit nur in derjenigen Richtung zuzulassen, in welcher die Kraftmesseinrichtung eingerichtet ist, die Kraft zu messen,
- die Lageranordnung ausgebildet ist, ein Verschieben des ersten Strukturbauteils relativ zum zweiten Strukturbauteil senkrecht zu einer in der kinematischen Gelenkskette des Roboterarms vom vorgelagerten Gelenk zum nachgelagerten Gelenk weisenden Abstandsgeraden zu erlauben,
- die Lageranordnung ein Viergelenk aufweist, welches ein erstes Viergelenks-Glied mit einem ersten Eingangs-Gelenk und einem ersten Ausgangs-Gelenk aufweist und ein zweites Viergelenks-Glied mit einem zweiten Eingangs-Gelenk und einem zweiten Ausgangs-Gelenk aufweist, wobei das erste Eingangs-Gelenk und das zweite Eingangs-Gelenk mit dem ersten Strukturbauteil verbunden ist und das erste Ausgangs-Gelenk und das zweite Ausgangs-Gelenk mit dem zweiten Strukturbauteil verbunden ist, und
- das erste Viergelenks-Glied und das zweite Viergelenks-Glied jeweils eine Länge in Längserstreckung des Gliedes des Roboterarms aufweist, die größer ist, als der Abstand zwischen dem ersten Strukturbauteil und dem zweiten Strukturbauteil, innerhalb welchem Abstand die Kraftmesseinrichtung angeordnet ist.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk ist. Der Roboter kann aber auch ein sogenannter Leichtbauroboter sein, welcher insbesondere sieben seriell aufeinander folgende Drehachsen aufweisen kann. Alternativ kann der Roboter aber auch ein SCARA-Roboter sein, insbesondere ein SCARA-Roboter mit sechs Freiheitsgraden sein.

Bei dem Industrieroboter kann es sich insbesondere um einen redundanten Industrieroboter handeln, unter dem ein mittels einer Robotersteuerung bewegbarer Roboterarm verstanden wird, der mehr manipulatorische Freiheitsgrade aufweist, als zur Erfüllung einer Aufgabe notwendig sind. Der Grad der Redundanz ergibt sich aus der Differenz der Anzahl von Freiheitsgraden des Roboterarms und der Dimension des Ereignisraums, in dem die Aufgabe zu lösen ist. Es kann sich dabei um eine kinematische Redundanz oder um eine aufgabenspezifische Redundanz handeln. Bei der kinematischen Redundanz ist die Anzahl der kinematischen Freiheitsgrade, im Allgemeinen die Anzahl der Gelenke des Roboterarms, größer als der Ereignisraum, welcher in einer realen Umgebung bei einer Bewegung im Raum durch die drei translatorischen und die drei rotatorischen Freiheitsgrade, also von sechs Freiheitsgrade gebildet wird. Ein redundanter Industrieroboter kann also beispielsweise ein Leichtbauroboter mit sieben Gelenken, insbesondere sieben Drehgelenken sein. Bei der aufgabenspezifischen Redundanz ist die Dimension der Aufgabenstellung hingegen kleiner als die Anzahl der kinematischen Freiheitsgrade des Roboterarms. Dies ist beispielsweise dann der Fall, wenn der Roboterarm an seinem Handflansch ein sich um eine Werkzeug-Antriebsachse drehbares Schraubwerkzeug trägt und eine der Drehgelenke des Roboterarms entlang dieser Werkzeug-Antriebsachse ausgerichtet ist.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft- und/oder momentengeregelt statt lediglich positionsgeregelt betrieben werden, was beispielsweise eine Mensch-Roboter-Kooperation sicherer macht. Außerdem kann dadurch eine solche sichere Mensch-Maschine-Kooperation erreicht werden, dass beispielsweise unbeabsichtigte Kollisionen des Roboterarmes mit Personen, wie beispielsweise Werker und Monteure entweder verhindert oder zumindest derart abgeschwächt werden können, so dass den Personen bzw. Monteuren kein Schaden entsteht.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Bei einem kraft- und/oder momentengeregelten Ansteuern der Gelenke des Roboterarms können die Gelenke des Roboterarms hinsichtlich ihrer Steifigkeit parametriert sein. In allen Ausführungen kann dazu das kraft- und/oder momentengeregelten Ansteuern von Antrieben des Roboterarms mittels Impedanzregelung oder Admittanzregelung erfolgen. Die Robotersteuerung kann eingerichtet sein, eine für die sichere Mensch-Roboter-Kooperation geeignete Nachgiebigkeit des Roboterarms insbesondere mittels Impedanzregelung oder Admittanzregelung zu erzeugen. In einer derartigen Nachgiebigkeitsregelung kann ein Handfahrbetrieb auch bedeuten, dass der Roboterarm von einem Werker handgeführt bewegt werden kann, d.h. die Gelenke des Roboterarms manuelle verstellt werden können.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte, ohne besondere Drehmomentsensorbauteile zu verwenden, beispielsweise lediglich anhand der gemessenen Motorströme der Antriebe an den Gelenken des SCARA-Roboters abgeschätzt werden.

Indem der Roboter, insbesondere ergänzend zu Drehmomentsensoren in den Gelenken des Roboters, eine erfindungsgemäße, insbesondere separate Kraftmesseinrichtung an einem Glied oder mehreren Gliedern des Roboterarms aufweist, die ausgebildet ist, eine Kraft an dem Glied in einer vorgegebenen Richtung zu messen, kann eine besonders genaue Bestimmung von auf den Roboterarm wirkenden Kräften erfolgen. Eine solche genaue Bestimmung von Kräften soll insbesondere so erfolgen, dass weiterhin die Positioniergenauigkeit des Roboterarms besonders genau ist bzw. besonders genau bleibt.

Die Erfindung ist im Folgenden anhand eines beispielhaften einzelnen Gliedes des Roboterarms beschrieben. Eine erfindungsgemäße Kraftmesseinrichtung, nach einer oder mehreren Ausführungsvarianten wie beschrieben, kann jedoch jeweils an zwei oder mehreren, insbesondere auch an allen Gliedern des Roboterarms vorgesehen sein.

Prinzipiell ist ein solches erfindungsgemäße Glied zweiteilig aufgebaut, d.h. es weist ein erstes Strukturbauteil auf, das beispielsweise eine erste Gehäusehälfte des Gliedes des Roboterarms sein kann, und es weist ein zweites Strukturbauteil auf, das beispielsweise eine zweite Gehäusehälfte des Gliedes des Roboterarms sein kann. Das erste Strukturbauteil ist zumindest in einem geringfügigen Umfang, d.h. zumindest in der Größenordnung des Verstellweges der Kraftmesseinrichtung, gegen das zweite Strukturbauteil verstellbar angeordnet. Eine solche verstellbare Anordnung wird dadurch erreicht, dass das erste Strukturbauteil bezüglich des zweiten Strukturbauteils verstellbar gelagert ist, d.h. entweder ist das erste Strukturbauteil an dem zweiten Strukturbauteil verstellbar gelagert, oder das zweite Strukturbauteil ist an dem ersten Strukturbauteil verstellbar gelagert. Für eine solche Verstellbarkeit von erstem Strukturbauteil und zweitem Strukturbauteil gegeneinander ist die erfindungsgemäße Lageranordnung vorgesehen.

Die Lageranordnung weist einen einzigen Freiheitsgrad auf, d.h. das erste Strukturbauteil ist relativ zum zweiten Strukturbauteil ausschließlich in derjenigen Richtung verstellbar, in welcher die Kraftmesseinrichtung eingerichtet ist, die Kraft zu messen. Eine solche Richtung kann auch als Kraftmessrichtung bezeichnet werden. In allen anderen Richtungen, insbesondere in allen anderen kartesischen Raumrichtungen verbindet die Lageranordnung das erste Strukturbauteil mit dem zweiten Strukturbauteil in starrer Weise. In Kraftmessrichtung, d.h. in derjenigen Richtung, in der die Lageranordnung ihren einzigen Freiheitsgrad aufweist, ist eine Verstellung von erstem Strukturbauteil relativ zum zweiten Strukturbauteil möglich, jedoch nur in einem derart geringen Umfang, dass der bauartbedingte Verstellweg der Kraftmesseinrichtung genutzt werden kann. Die Lageranordnung kann insbesondere ausgebildet sein, eine über den bauartbedingten Verstellweg der Kraftmesseinrichtung hinausgehende Verstellung des ersten Strukturbauteils relativ zum zweiten Strukturbauteil zu unterbinden, d.h. nicht zuzulassen. Eine über den bauartbedingten Verstellweg der Kraftmesseinrichtung hinausgehende Verstellung der Lageranordnung kann beispielsweise durch Endanschläge verhindert werden, welche an dem ersten Strukturbauteil und/oder an dem zweiten Strukturbauteil angeordnet sind und welche ausgebildet sind, bei Erreichen bzw. Überschreiten des maximalen Verstellweges der Kraftmesseinrichtung das Strukturbauteil und das zweite Strukturbauteil formschlüssig aneinanderstoßen zu lassen.

Die Kraftmesseinrichtung kann zur direkten Kraftmessung ausgebildet sein. Die Kraftmesseinrichtung kann insbesondere zur eindimensionalen Kraftmessung ausgebildet sein. Die Kraftmesseinrichtung kann aber auch von einer Momentmesseinrichtung gebildet werden. Insbesondere kann die Kraftmesseinrichtung einen ein- oder mehrdimensionalen Kraftsensor und/oder ein- oder mehrdimensionalen Momentsensor aufweisen.

Aus Sicherheitsgründen können Endanschläge vorgesehen sein, die eine unkontrollierte, insbesondere zu große Bewegung der beiden Strukturteile zueinander verhindern, beispielsweise wenn es zu einem mechanischen Bruch der Kraftmesseinrichtung kommen sollte.

In einer ersten Ausführungsvariante von Endanschlägen können beispielsweise im Falle einer Viergelenksanordnung der Lageranordnung die Endanschläge zwischen jeweils einem Viergelenks-Glied, bzw. einer Gelenkskoppel oder Schwinge der Viergelenksanordnung und dem jeweiligen Strukturbauteil angeordnet sein. Die Parallelkinematik bietet verschiedene Ansatzpunkte für die Integration von Endanschlägen. Die Viergelenks-Glieder, bzw. die Gelenkskoppeln oder Schwingen können so aufgebaut sein, dass diese nach überschreiten eines bestimmten Bewegungswinkels mit einem der Strukturbauteile kollidieren.

In einer zweiten Ausführungsvariante von Endanschlägen können die Endanschläge zwischen den Strukturbauteilen angeordnet sein. Die Strukturbauteile können dabei so zusammengefügt sein, dass sie bei einer Bewegung des Viergelenks die über einen bestimmten Winkel hinausgeht miteinander kollidieren, wodurch eine Weiterbewegung des Gelenks verhindert ist.

Das betreffende Glied des Roboterarms ist als so aufgebaut, dass alle Bewegungsrichtungen von erstem Strukturbauteil relativ zum zweiten Strukturbauteil blockiert sind, ausgenommen diejenige Richtung in der anwendungsgemäß, d.h. vorgegebener Maßen eine Kraft gemessen werden soll. Die erfindungsgemäße Kraftmesseinrichtung ist derart innerhalb des Gliedes angeordnet, bzw. derart zwischen dem ersten Strukturbauteil und dem zweiten Strukturbauteil angeordnet, dass ein zu messender Kraftfluss entlang des Freiheitsgrades der Lageranordnung über die Kraftmesseinrichtung erfolgt. Der tatsächliche Verstellweg der Kraftmesseinrichtung, bzw. ein tatsächlicher Verschiebeweg von erstem Strukturbauteil relativ zum zweiten Strukturbauteil stellt sich in Abhängigkeit der Größe einer zu messenden Kraft entsprechend der Steifigkeit der Kraftmesseinrichtung ein. Die Kraftmesseinrichtung kann ein dem Fachmann als solches bekannter Kraftsensor und/oder ein Momentsensor, insbesondere ein Drehmomentsensor sein. Ein derartiger Drehmomentsensor kann beispielsweise gemäß EP 1 353 159 A2 aufgebaut sein.

Die Lageranordnung kann ausgebildet sein, ein Verschieben des ersten Strukturbauteils relativ zum zweiten Strukturbauteil zu erlauben.

Die Lageranordnung ist ausgebildet, ein Verschieben des ersten Strukturbauteils relativ zum zweiten Strukturbauteil senkrecht zu einer in der kinematischen Gelenkskette des Roboterarms vom vorgelagerten Gelenk zum nachgelagerten Gelenk weisenden Abstandsgeraden zu erlauben.

Mittels des ersten Strukturbauteils und des zweiten Strukturbauteils wird ein zweiteiliges Glied des Roboterarms geschaffen. Beide Strukturbauteile sind über eine eigene Kinematik, d.h. eine Lageranordnung verbunden. Diese Lageranordnung ist im Falle dieser Ausführungsform ausgebildet, ein zumindest annähernd oder sogar genau senkrechtes Verschieben von erstem Strukturbauteil relativ zum zweiten Strukturbauteil zu einer in der kinematischen Gelenkskette des Roboterarms vom vorgelagerten Gelenk zum nachgelagerten Gelenk weisenden Abstandsgeraden zu bewirken. Anders ausgedrückt, ist die Lageranordnung, welche lediglich einen einzigen Freiheitsgrad aufweist, ausgebildet, eines der Strukturbauteile aus einer ersten Position in eine zweite Position zu verstellen, in welcher das Strukturbauteil gegenüber seiner ersten Position parallelversetzt ist. Ein solcher Parallelversatz kann parallel zu einer Abstandsgeraden ausgerichtet erfolgen, welche Abstandsgerade von dem in der kinematischen Gelenkskette des Roboterarms dem Glied der Lageranordnung vorgelagerten Gelenk zu dessen nachgelagertem Gelenk weist. Der Parallelversatz kann insbesondere in einer senkrechten Richtung zur Abstandsgeraden erfolgen.

In einer konstruktiv auf das Wesentliche reduzierten Ausführung kann demgemäß das erste Strukturbauteil über zwei parallel angeordnete Schwingen, die auch als Koppelstangen bezeichnet werden können, mit dem zweiten Strukturbauteil verbunden sein. Jede Schwinge kann dabei zwei gegenüberliegende Schwingenlager aufweisen, von denen jedes ausgebildet ist, die Schwinge um einen einzelnen Freiheitsgrad drehbar mit dem ersten Strukturbauteil einerseits und mit dem zweiten Strukturbauteil andererseits zu verbinden. Die beiden Strukturbauteile und die beiden Schwingen bzw. Koppelstangen können dadurch ein Viergelenk bilden.

Erfindungsgemäß weist die Lageranordnung ein Viergelenk auf, welches ein erstes Viergelenks-Glied mit einem ersten Eingangs-Gelenk und einem ersten Ausgangs-Gelenk aufweist und ein zweites Viergelenks-Glied mit einem zweiten Eingangs-Gelenk und einem zweiten Ausgangs-Gelenk aufweist, wobei das erste Eingangs-Gelenk und das zweite Eingangs-Gelenk mit dem ersten Strukturbauteil verbunden ist und das erste Ausgangs-Gelenk und das zweite Ausgangs-Gelenk mit dem zweiten Strukturbauteil verbunden ist.

Das erste Viergelenks-Glied kann insoweit eine erste Schwinge oder eine erste Koppelstange sein. Das zweite Viergelenks-Glied kann insoweit eine zweite Schwinge oder eine zweite Koppelstange sein.

In einer kinematischen Kette von angetriebenen Gelenken des Roboterarms kann generell die Abfolge der Gelenke, d.h. die Achsen ausgehend von einer festen Basis, d.h. einem Grundgestell des Roboterarms, welches beispielsweise eine erste Achse trägt, bis hin zu einem Handflansch des Roboterarms, welcher beispielsweise eine sechse oder siebte Achse trägt, aufsteigend bezeichnet werden. Demgemäß kann ein nachgelagertes Gelenk in der kinematischen Kette dem Handflansch des Roboterarms näher liegen, als ein vorgelagertes Gelenk.

Das erste Eingangs-Gelenk des Viergelenks und das zweite Eingangs-Gelenk des Viergelenks können also demgemäß mit dem vorgelagerten angetriebenen Gelenk des Roboterarms verbunden sein. Das erste Ausgangs-Gelenk des Viergelenks und das zweite Ausgangs-Gelenk des Viergelenks können demgemäß mit dem nachgelagerten angetriebenen Gelenk des Roboterarms verbunden sein.

Weil mit der Kraftmesseinrichtung die Kraft gemessen wird, die zu einem Parallelversatz der beiden Strukturbauteile führt, sollte die Lageranordnung so ausgeführt werden, dass die Kraft ohne Reibung oder allenfalls mit geringer Reibung übertragen wird, dass die Kraft ohne Stick-Slip-Verhalten oder allenfalls mit geringem Stick-Slip-Verhalten übertragen wird, dass die Lageranordnung in sich selbst kein Gegenmoment oder allenfalls ein geringes Gegenmoment erzeugt, und dass andere Belastungen auf die Tragstruktur, d.h. den Roboterarm, insbesondere dessen Glieder, wie beispielsweise ein Torsionsmoment, die Lageranordnung nicht verklemmen.

Bei den Gelenken des Viergelenks kann es sich z.B. um stoffschlüssige und/oder formschlüssige Gelenke, um Gleitlager oder Wälzlager handeln. Mit Wälzlagern können Viergelenke aufgebaut werden, die nur geringe Reibung aufweisen und die auch torsionssteif angeordnet werden können. Diese Lagerung ist allerdings aufwendig und die Gelenke müssen sehr gut zueinander ausgerichtet sein, damit sich kein Verklemmen der Kinematik ergibt. Aufgrund der nur sehr kleinen Drehwinkel in diesen Gelenken sind Wälzlager nicht die beste Wahl. Gleitlager weisen ausgeprägte Stick-Slip-Effekte auf und müssen gut eingestellt werden, um spielfrei wechselnde Torsionsmomente in der Struktur aufnehmen zu können, was leicht zu einem Verklemmen führen kann.

Erfindungsgemäß könnend deshalb die Gelenke des Viergelenks, insbesondere das erste Eingangs-Gelenk, das erste Ausgangs-Gelenk, das zweite Eingangs-Gelenk und das zweite Ausgangs-Gelenk, Biegegelenke sein, die ausgebildet sind, lediglich eine Verschiebung des ersten Strukturbauteils relativ zum zweiten Strukturbauteil senkrecht zur in der kinematischen Gelenkskette des Roboterarms vom vorgelagerten Gelenk zum nachgelagerten Gelenk weisenden Abstandsgeraden zu erlauben, und ein Verdrehen des ersten Strukturbauteils relativ zum zweiten Strukturbauteil, insbesondere um eine parallel oder rechtwinklig zur Abstandsgeraden laufenden Drehachse, zu verhindern.

Die Biegegelenke, welche Biegeelemente aufweisen können, können so aufgebaut werden, dass sie zum einen leicht gebogen werden können und zum anderen über eine ausreichende Steifigkeit bei wechselnden Torsionsbelastungen verfügen. Biegeelemente als Lageranordnung haben den Vorteil, dass diese bei einer Verformung kein Stick-Slip-Verhalten zeigen. Für eine Verformung wird eine Kraft, bzw. ein Moment benötigt, dass bei einer Messung nicht mehr von der Kraftmesseinrichtung, d.h. dem Kraftsensor gesehen wird. Allerding ist dieses Biegemoment wiederholbar bekannt und kann somit bei einer Kalibrierung berücksichtigt werden.

Beispielsweise eine rechtwinklige Anordnung von zwei Biegeblechsegmenten je Lagerpunkt ermöglicht eine Steife Lagerung des Viergelenks in Bezug auf z.B. Torsionsmomente die auf die Struktur entlang deren Längsachse wirken. Wenn die Schwingen, d.h. das erste Viergelenks-Glied und das zweite Viergelenks-Glied, in ihren Längserstreckungen vergrößert werden, verringert dies die Reibung, das Gegenmoment und die Stick-Slip-Effekte im Lager. Dies erfolgt daher, dass sich das Moment auf die Lager aufgrund der angreifenden äußeren Kraft mit dem Hebelarm der Schwingenlänge vergrößert. Weiterhin verkleinert sich der Drehwinkel in den Lagern bei gleichbleibendem Parallelversatz.

Erfindungsgemäß weisen das erste Viergelenks-Glied und das zweite Viergelenks-Glied jeweils eine Länge in Längserstreckung des Gliedes des Roboterarms auf, die größer ist, als der Abstand zwischen dem ersten Strukturbauteil und dem zweiten Strukturbauteil, innerhalb welchem Abstand die Kraftmesseinrichtung, insbesondere ein Drehmomentsensor und dessen Anbauflansche und/oder Hebel, angeordnet ist.

Eine Kraftmessung kann mithilfe eines Momentsensors erfolgen, der gegenüber der Querkraft aufgrund der angreifenden Kraft entkoppelt ist und der in einer Viergelenkkinematik gegen ein Verklemmen geschützt geführt wird, die mit Biegeblechen gelagert ist. In dieser Ausführung wird die Lagerfunktion von Biegeblechen übernommen. Da die Biegewinkel sehr klein sind, findet so gut wie keine Bewegung der Drehachse der Gelenke statt. Um die Kinematik zu versteifen und um die Beeinflussung durch ein Torsionsmoment entlang der Längsachse zu verringern, können die Biegelängen des Bleches sehr kurz sein. Alternativ oder ergänzend können die Schwingen der Parallelkinematik, d.h. die Koppelstangen des Viergelenks, verlängert sein, d.h. größer sein, als der Bauraum zwischen den beiden Strukturbauteilen, um über den so vergrößerten Hebelarm das Biegemoment auf das Biegeblech zu vergrößern und um den Biegewinkel der Bleche zu verringern. Um zu ermöglichen, dass die Länge der Schwingen bzw. der Koppelstangen größer ist, als der Abstand der Sensorbefestigungen, können die Schwingen außerhalb der Struktur angeordnet sein. Die Kraftmesseinrichtung, insbesondere der Sensor befindet sich innerhalb des Viergelenks.

Eine Kraftmessung kann aber auch mit Hilfe eines Momentsensors erfolgen, der gegenüber der Querkraft aufgrund der angreifenden Kraft entkoppelt ist und der in einer Viergelenckinematik gegen ein Verklemmen geschützt geführt wird, die mit Verformungselementen gelagert ist. Der Unterschied beaufweist, der mit dem zweiten Strukturbauteil verbunden ist, wobei der Innenflansch mit dem ersten Strukturbauteil verbunden ist.

In einer zweiten Variante kann die Kraftmesseinrichtung einen Drehmomentsensor aufweisen, welcher einen Innenflansch, einen Außenflansch und den Innenflansch mit dem Außenflansch verbindende Verbindungstege umfasst, welche mit Messsensoren, insbesondere Dehnmesssensoren versehen sind, wobei der Drehmomentsensor einen mit dem Innenflansch verbundenen Hebel aufweist, der mit dem zweiten Strukturbauteil verbunden ist, wobei der Außenflansch mit dem ersten Strukturbauteil verbunden ist.

In einer dritten Variante kann die Kraftmesseinrichtung einen Drehmomentsensor aufweisen, welcher einen Innenflansch, einen Außenflansch und den Innenflansch mit dem Außenflansch verbindende Verbindungstege umfasst, welche mit Messsensoren, insbesondere Dehnmesssensoren versehen sind, wobei der Drehmomentsensor einen mit dem Außenflansch verbundenen Hebel aufweist, der mit dem ersten Strukturbauteil verbunden ist, wobei der Innenflansch mit dem zweiten Strukturbauteil verbunden ist.

In einer vierten Variante kann die Kraftmesseinrichtung einen Drehmomentsensor aufweisen, welcher einen Innenflansch, einen Außenflansch und den Innenflansch mit dem Außenflansch verbindende Verbindungstege umfasst, welche mit Messsensoren, insbesondere Dehnmesssensoren versehen sind, wobei der Drehmomentsensor einen mit dem Innenflansch verbundenen Hebel aufweist, der mit dem ersten Strukturbauteil verbunden ist, wobei der Außenflansch mit dem zweiten Strukturbauteil verbunden ist.

In den beschriebenen Varianten des Drehmomentsensors kann das eine Strukturbauteil über die beiden Schwingen oder Koppelstangen relativ zum anderen Strukturbauteil parallel entlang einer Kreisbahn bewegt werden. An dem einen Strukturbauteil ist der innere Bereich des Momentsensors befestigt. Um den äußeren Teil des Momentsensors befindet sich ein Ring, an dem ein Hebel angebracht ist, dessen Ende im anderen Strukturbauteil gehalten wird. Diese Halteverbindung ermöglicht eine kleine Bewegung des Hebels entlang seiner Längsachse. Wenn das eine Strukturbauteil gehalten wird und auf das andere Strukturbauteil eine Kraft wirkt, die eine Komponente in Bewegungsrichtung der Parallelkinematik besitzt, erfährt der Außenring des Momentsensors ein Moment gegenüber dessen Innenring. Dieses Moment entspricht der Kraft in Bewegungsrichtung multipliziert mit dem Abstand zwischen Mittelpunkt des Momentsensors und Mittelpunkt der Befestigung des Hebels.

Der Momentsensor ist also in einer solchen Ausführungsform so aufgebaut, dass daran zwei Anschlüsse enthalten sind, über die das Moment gemessen werden kann, mit dem sie gegeneinander um eine definierte Achse verspannt werden. Die Einbindung des Momentsensors erfolgt so, dass ein Anschluss des Momentsensors mit dem einen Strukturbauteil verbunden ist und der andere Anschluss des Momentsensors über einen Hebel an dem anderen Strukturbauteil anliegt. Eine Verschiebung der beiden Strukturbauteile gegeneinander durch eine Kraft bewirkt eine Torsion des Momentsensors um die definierte Achse. Diese Torsion erzeugt im Momentsensor ein Gegenmoment das gemessen werden kann und mit dem aufgrund der Hebellänge die Kraft bestimmt werden kann.

Generell kann in allen entsprechenden Ausführungen der Hebel eine Zapfen, insbesondere einen Kugelkopfzapfen aufweisen, welcher in eine Ausnehmung, insbesondere ein Langloch oder Quadratloch einer Gelenksstange eingreift, die mit dem ersten Strukturbauteil verbunden ist und dass der Hebel einen Zapfen, insbesondere einen Kugelkopfzapfen aufweist, der insbesondere einen ersten Anschlag nach oben und einen zweiten Anschlag nach unten aufweist, welcher in eine Ausnehmung, insbesondere eine Öffnung einer Gelenksstange eingreift, die einen dritten Anschlag nach oben und einen vierten Anschlag nach unten aufweist, eingreift und mit dem zweiten Strukturbauteil verbunden ist.

In einer abgewandelten Ausführungsart kann der Innenflansch des Drehmomentsensors mit einem Zwischensegment verbunden sein, welches einerseits über ein erstes Viergelenk mit dem ersten Strukturbauteil gekoppelt ist und andererseits über ein zweites Viergelenk mit dem zweiten Strukturbauteil gekoppelt ist, wobei der Außenflansch zwei Hebel aufweist, von denen ein Hebel mit dem ersten Strukturbauteil verbunden ist und der andere Hebel mit dem zweiten Strukturbauteil verbunden ist.

Eine Kraftmessung kann mit Hilfe eines Momentsensors erfolgen, der gegenüber der Querkraft aufgrund der angreifenden Kraft entkoppelt ist. Um den Momentsensor von der Querkraft zu entkoppeln, die durch die angreifende Kraft entsteht, kann der Momentsensor über zwei symmetrische Hebel belastet angeordnet sein. Der Momentsensor ist in diesem Fall hierfür an einem Zwischensegment angebracht, das so mittig zwischen den beiden Schwingen der Parallelkinematik gelagert ist, dass es ebenfalls parallel mitbewegt wird. Die Lagerpunkte des einen Strukturbauteils, des anderen Strukturteils und dem Zwischensegment befinden sich auf jeder Schwinge entlang einer Geraden. Da die Kraft an zwei Hebeln am Momentsensor angreift, wird im Vergleich zu vorherigen Lösung zweimal ein nur halb so langer Hebel benötigt, um das gleiche Moment zu erhalten. Dies hat zur Folge, dass bei gleichen Randbedingungen der maximale Parallelversatz nur halb so groß ist.

Eine Kraftmessung kann aber auch mit Hilfe eines Momentsensors erfolgen, der gegenüber der Querkraft aufgrund der angreifenden Kraft entkoppelt ist und gegen ein Verklemmen geschützt in der Kinematik gelagert ist. Der Momentsensor wird in diesem Fall mit einem Anschluss im Zwischensegment befestigt. Das Zwischensegment weist an seinen Enden, die als Anschluss zu den Schwingen der Parallelkinematik dienen, kugelförmige Spitzen auf. Am anderen Anschluss des Momentsensors ist ein Bauteil befestigt, dass zwei symmetrische gleich lange Hebel aufweist, die in einer Kugelform enden. Die kugeligen Enden der beiden Hebel, die mit einem Anschluss des Momentsensors verbunden sind, werden jeweils in einer Kulisse in dem einen Strukturbauteil und in dem anderen Strukturbauteil gehalten. Die eine Kulisse fixiert das Kugelende entlang der Richtung der zu messenden Kraft. Alle anderen Bewegungsrichtungen werden nicht eingeschränkt. Dies kann beispielsweise über eine rechteckige Aussparung erfolgen die nur in den beiden geblockten Bewegungsrichtungen die Kugel berühren. Das andere Kugelende des Hebels wird von einer Kulisse gehalten die alle Bewegungsrichtungen entlang der zu messenden Kraft und rechtwinklig dazu verhindert. Dies kann beispielsweise über eine Bohrung erfolgen, in der sich bündig das Kugelende des Hebels befindet. Die Schwingen der Parallelkinematik können jeweils eine Bohrung aufweisen, die im unausgelenkten Zustand der Schwingen zueinander fluchten. In diesen beiden Bohrungen befinden sich bündig die kugeligen Enden des Zwischensegments. Hierdurch wird das Zwischensegment und damit der Momentsensor auf einer Geraden gehalten, entlang der das Zwischensegment sich bewegen und um die das Zwischensegment sich drehen kann. Durch diese Lagerung erfährt der Momentsensor keine Querkräfte aufgrund der zu messenden Kraft und wird von kleinen Verformungen der Tragstruktur aufgrund äußerer Belastungen nicht beeinflusst. Um die Position der Lagerpunkte für den Momentsensor von den Auswirkungen von Torsionsmomenten entlang der Längsachse der Tragstruktur zu entkoppeln, ist dieser mittig in der zum Sensor achssymmetrischen Tragstruktur eingebracht. Durch die mittige Ausrichtung des Momentsensors in der Struktur befinden sich die Lagerpunkte der kugelförmigen Kontaktflächen auf neutralen Fasern der durch die Torsion hervorgerufenen Verformung.

Die Kraftmesseinrichtung kann alternativ oder ergänzend zu einem Drehmomentsensor einen Kraftsensor aufweisen, welcher einen ersten Sensorflansch aufweist, der mit dem ersten Strukturbauteil oder dem zweiten Strukturbauteil verbunden ist und einen zweiten Sensorflansch aufweist, der mit dem ersten Viergelenks-Glied oder dem zweiten Viergelenks-Glied verbunden ist.

Die Kraftmesseinrichtung kann alternativ oder ergänzend zu einem Drehmomentsensor einen Kraftsensor aufweisen, welcher einen ersten Sensorflansch aufweist, der mit dem ersten Strukturbauteil verbunden ist und einen zweiten Sensorflansch aufweist, der mit dem zweiten Strukturbauteil verbunden ist.

Die Kraftmesseinrichtung kann einen Kraftsensor aufweisen, welcher einen ersten Sensorflansch aufweist, der mit dem ersten Strukturbauteil oder dem zweiten Strukturbauteil verbunden ist und einen zweiten Sensorflansch aufweisen, der mit dem ersten Viergelenks-Glied oder dem zweiten Viergelenks-Glied verbunden ist und die beiden Sensorflansche können dabei ausgebildet sein, sich in Messrichtung der dazwischen liegenden Kraftmesseinrichtung zu bewegen, bei einer Beaufschlagung des ersten Strukturbauteils oder des zweiten Strukturbauteils mit einer Kraft in Messrichtung, die eine Verschiebung des ersten Strukturbauteils und/oder des zweiten Strukturbauteils in Messrichtung zur Folge hat.

Alternativ kann die Kraftmesseinrichtung einen Kraftsensor aufweisen, welcher einen ersten Sensorflansch aufweist, der mit dem ersten Strukturbauteil verbunden ist und einen zweiten Sensorflansch aufweisen, der mit dem zweiten Strukturbauteil verbunden ist und die beiden Sensorflansche können dabei ausgebildet sein, sich in Messrichtung der dazwischen liegenden Kraftmesseinrichtung zu bewegen, bei einer Beaufschlagung des ersten Strukturbauteils oder des zweiten Strukturbauteils mit einer Kraft in Messrichtung, die eine Verschiebung des ersten Strukturbauteils und/oder des zweiten Strukturbauteils in Messrichtung zur Folge hat.

Das erste Viergelenk kann eine im Querschnitt quadratische erste Ausnehmung mit einem Paar von jeweils zwei gegenüberliegenden Innenwänden aufweisen und das Zwischensegment dabei einen ersten Schenkel aufweisen, der einen ersten Kugelkopf trägt, welcher in der ersten Ausnehmung derart eingefügt ist, dass das eine Paar der gegenüberliegenden Innenwände den ersten Kugelkopf in einer ersten Richtung führt und das andere Paar der gegenüberliegenden Innenwände den ersten Kugelkopf in einer zur ersten Richtung senkrecht angeordneten zweiten Richtung führt, welche beiden Richtungen senkrecht zur vorgegebenen Richtung angeordnet sind, in welcher die Kraftmesseinrichtung die Kraft an dem Glied misst. Alternativ oder ergänzend kann das zweite Viergelenk eine im Querschnitt quadratische zweite Ausnehmung mit einem Paar von jeweils zwei gegenüberliegenden Innenwänden aufweisen und das Zwischensegment dabei einen zweiten Schenkel aufweisen, der einen zweiten Kugelkopf trägt, welcher in der zweiten Ausnehmung derart eingefügt ist, dass das eine Paar der gegenüberliegenden Innenwände den zweiten Kugelkopf in einer ersten Richtung führt und das andere Paar der gegenüberliegenden Innenwände den zweiten Kugelkopf in einer zur ersten Richtung senkrecht angeordneten zweiten Richtung führt, welche beiden Richtungen senkrecht zur vorgegebenen Richtung angeordnet sind, in welcher die Kraftmesseinrichtung die Kraft an dem Glied misst.

Die Kraftmesseinrichtung, insbesondere der Drehmomentsensor kann somit mittels des ersten Hebels, des zweiten Hebels, des ersten Schenkels und/oder des zweiten Schenkels derart spannungsfrei gelagert werden, dass eine auf das erste Strukturbauteil und/oder auf das zweite Strukturbauteil einwirkende externe Kraft ausschließlich zu einer Torsionsbelastung an der Kraftmesseinrichtung bzw. dem Drehmomentsensor führt.

Die Kraftmesseinrichtung kann einen Drehmomentsensor aufweisen, welcher einen Innenflansch, einen Außenflansch und den Innenflansch mit dem Außenflansch verbindende Verbindungstege umfasst, welche mit Dehnmesssensoren versehen sind, welcher Drehmomentsensor einen mit dem Außenflansch verbundenen ersten Hebel aufweist, der mit dem ersten Strukturbauteil verbunden ist, und einen mit dem Außenflansch verbundenen zweiten Hebel aufweist, der mit dem zweiten Strukturbauteil verbunden ist.

Alternativ kann die Kraftmesseinrichtung einen Drehmomentsensor aufweisen, welcher einen Innenflansch, einen Außenflansch und den Innenflansch mit dem Außenflansch verbindende Verbindungstege umfasst, welche mit Dehnmesssensoren versehen sind, welcher Drehmomentsensor einen mit dem Innenflansch verbundenen ersten Hebel aufweist, der mit dem ersten Strukturbauteil verbunden ist, und einen mit dem Außenflansch verbundenen zweiten Hebel aufweist, der mit dem zweiten Strukturbauteil verbunden ist.

Der erste Hebel kann einen Zapfen, insbesondere einen Kugelkopfzapfen aufweisen, welcher in eine Ausnehmung, insbesondere ein Quadratloch oder eine Bohrung des ersten Strukturteils bzw. in eine Ausnehmung, insbesondere ein Quadratloch oder eine Bohrung einer ersten Gelenksstange eingreift, wobei der zweite Hebel einen Zapfen, insbesondere einen Kugelkopfzapfen aufweist, welcher in eine Ausnehmung, insbesondere ein Rechteckloch des zweiten Strukturteils bzw. in eine Ausnehmung, insbesondere ein Rechteckloch einer zweiten Gelenksstange eingreift.

Das Quadratloch oder die Bohrung bildet dabei eine Blockierung des Zapfens bzw. des Kugelkopfzapfens in vier Richtungen, bspw. in einer X-Richtung nach vorne und nach hinten, sowie in einer Y-Richtung nach oben und nach unten. Durch das Quadratloch oder die Bohrung wird insoweit ein zweiwertiges Lager für den Zapfen bzw. den Kugelkopfzapfen gebildet.

Das Rechteckloch bildet dabei eine Blockierung des Zapfens bzw. des Kugelkopfzapfens lediglich in zwei Richtungen, bspw. nur in einer Y-Richtung nach oben und nach unten. Durch das Rechteckloch wird insoweit ein einwertiges Lager für den Zapfen bzw. den Kugelkopfzapfen gebildet.

Alternativ kann der erste Hebel einen Zapfen, insbesondere einen Kugelkopfzapfen aufweisen, welcher in eine Ausnehmung, insbesondere ein Quadratloch oder die Bohrung des zweiten Strukturteils bzw. in eine Ausnehmung, insbesondere ein Quadratloch oder die Bohrung einer zweiten Gelenksstange eingreift, wobei der zweite Hebel einen Zapfen, insbesondere einen Kugelkopfzapfen aufweist, welcher in eine Ausnehmung, insbesondere ein Rechteckloch des ersten Strukturteils bzw. in eine Ausnehmung, insbesondere ein Rechteckloch einer ersten Gelenksstange eingreift.

Das Quadratloch oder die Bohrung bildet dabei eine Blockierung des Zapfens bzw. des Kugelkopfzapfens in vier Richtungen, bspw. in einer X-Richtung nach vorne und nach hinten, sowie in einer Y-Richtung nach oben und nach unten. Durch das Quadratloch wird insoweit ein zweiwertiges Lager für den Zapfen bzw. den Kugelkopfzapfen gebildet.

Das Rechteckloch bildet dabei eine Blockierung des Zapfens bzw. des Kugelkopfzapfens lediglich in zwei Richtungen, bspw. nur in einer Y-Richtung nach oben und nach unten. Durch das Rechteckloch wird insoweit ein einwertiges Lager für den Zapfen bzw. den Kugelkopfzapfen gebildet.

In einer allgemeinen Ausführungsform werden die Lageranordnung und die Kraftmesseinrichtung von separaten Bauteilanordnungen gebildet. Dies bedeutet, dass alle oder zumindest die wesentlichen zwischen dem ersten Strukturbauteil und dem zweiten Strukturbauteil übertragenen Kräfte und Momente über die separate Lageranordnung übertragen werden. Generell kann in einer speziellen Ausführungsvariante die Lageranordnung aber auch durch die Kraftmesseinrichtung selbst gebildet werden. Dies kann bedeutet, dass ein Teil, ein wesentlicher Teil oder alle zwischen dem ersten Strukturbauteil und dem zweiten Strukturbauteil übertragenen Kräfte und Momente über die Kraftmesseinrichtung selbst übertragen werden. So kann die Kraftmesseinrichtung beispielsweise einen Befestigungsflansch aufweisen, der mit dem einen Strukturbauteil starr verbunden ist und einen in das andere Strukturbauteil ragenden Hebel aufweisen, der an diesem anderen Strukturbauteil festgelegt ist. Die Kraftmesseinrichtung kann insoweit die Lageranordnung aufweisen, sei es als speziell ausgebildete Dreh- oder Schiebelager oder in Form von Federabschnitten, die an einem Grundkörper der Kraftmesseinrichtung ausgebildet sein können.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines erfindungsgemäßen Industrieroboters in Art eines Sechsachs-Knickarmroboters;
- Fig. 2: eine perspektivische Ansicht eines erfindungsgemäßen Roboters in Art eines Leichtbauroboters;
- Fig. 3: eine perspektivische Ansicht eines erfindungsgemäßen Roboters in Art eines SCARA-Roboters;
- Fig. 4: eine schematische Darstellung eines Gliedes eines Roboterarms mit einem ersten Strukturbauteil, einem zweiten Strukturbauteil und einer zugeordneten Kraftmesseinrichtung;
- Fig. 5: eine schematische Darstellung einer das erste Strukturbauteil, mit dem zweiten Strukturbauteil verbindenden Lageranordnung in Art eines Viergelenks, oben in einer nicht ausgelenkten Konfiguration und unten in einer ausgelenkten Konfiguration;
- Fig. 6: eine schematische Darstellung zweier beispielhafter Varianten von Lageranordnungen in Art von Viergelenken mit Biegegelenken;
- Fig. 7: eine schematische Darstellung einer beispielhaften Variante einer alternativen Lageranordnung mit Schubelementen;
- Fig. 8: eine schematische Darstellung des ersten Strukturbauteils und des zweiten Strukturbauteils mit einem Momentsensor;
- Fig. 9: eine perspektivische Schnittdarstellung des Gelenks gemäß Fig. 8;
- Fig. 10: eine schematische Darstellung des ersten Strukturbauteils und des zweiten Strukturbauteils mit einem Momentsensor und einem Zwischensegment;
- Fig. 11: eine perspektivische Schnittdarstellung des Gelenks gemäß Fig. 10;
- Fig. 12: eine perspektivische Schnittdarstellung einer Variante eines Gelenks mit einem Momentsensor, der verklemmungsfrei gelagert ist;
- Fig. 13: eine perspektivische Schnittdarstellung einer Variante eines Gelenks mit einem Momentsensor, der Hebel mit Kugelkopfzapfen aufweist;
- Fig. 14: eine perspektivische Darstellung des Gelenks gemäß Fig. 13;
- Fig. 15: eine perspektivische Schnittdarstellung eines alternativen Gelenks mit verlängerten Schwingen, kurzen Biegeelementen und Anschlägen;
- Fig. 16: eine perspektivische Schnittdarstellung eines alternativen Gelenks mit verlängerten Schwingen, Drehgelenken (Schubgelenk) und Anschlägen;
- Fig. 17: eine schematische Darstellung einer eindimensionalen Kraftmesseinrichtung, die zwischen dem ersten Strukturbauteil und einer Schwinge eingekoppelt ist;
- Fig. 18: eine schematische Darstellung einer eindimensionalen Kraftmesseinrichtung, die zwischen dem ersten Strukturbauteil und dem zweiten Strukturbauteil zur Kraftmessung in Querrichtung eingekoppelt ist;
- Fig. 19: eine schematische Darstellung einer eindimensionalen Kraftmesseinrichtung, die zwischen dem ersten Strukturbauteil und dem zweiten Strukturbauteil zur Kraftmessung in Längsrichtung eingekoppelt ist; und
- Fig. 20: eine Schnittdarstellung eines alternativen Gelenks mit verlängerten Schwingen, kurzen Biegeelementen und Anschlägen.

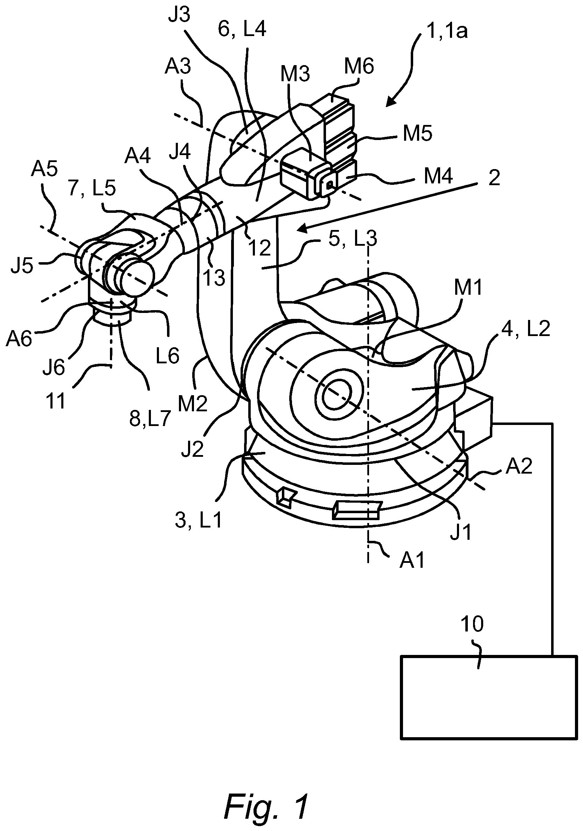

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Flansch 8 ausgeführten Befestigungsvorrichtung zum Befestigen eines Werkzeugs 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Antriebe M1 bis M6 über die Robotersteuerung 10 programmgesteuert antreibbar. Generell kann dazu zwischen jedem der Glieder L1 bis L7 und dem jeweils zugeordneten elektrischen Antrieb M1 bis M6 ein Getriebe vorgesehen sein. Im Falle des in Fig. 1 gezeigten Ausführungsbeispiels kann repräsentativ für jedes der Glieder L1 bis L7 beispielsweise das Glied L4 ein erstes Strukturbauteil 12 und ein zweiten Strukturbauteil 13 aufweisen.

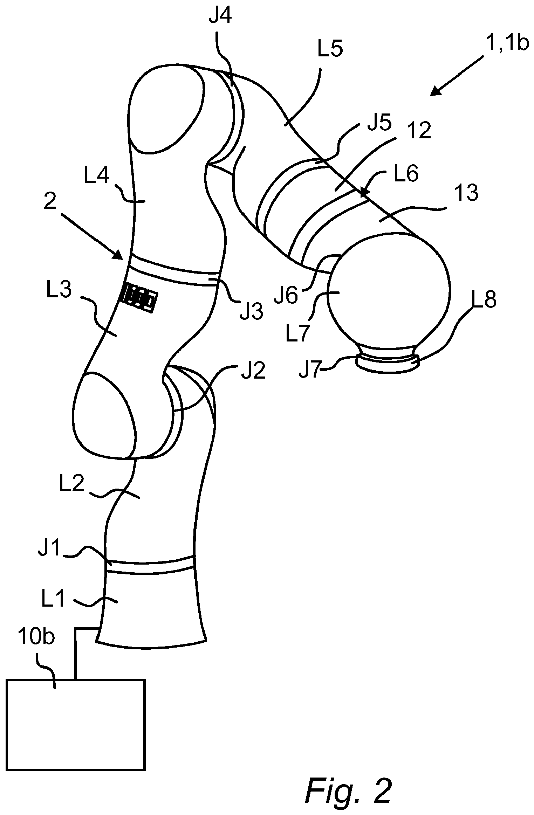

Die Fig. 2 zeigt einen Roboter 1 in einer beispielhaften Ausführung als ein so genannter Leichtbauroboter 1b, der einen Manipulatorarm 2 und eine Robotersteuerung 10b aufweist. Der Manipulatorarm 2 umfasst im Falle des vorliegenden Ausführungsbeispiels acht, nacheinander angeordnete und mittels Gelenke J1-J7 drehbar miteinander verbundene Glieder L1-L8. Im Falle des in Fig. 2 gezeigten Ausführungsbeispiels kann repräsentativ für jedes der Glieder L1 bis L8 beispielsweise das Glied L6 das erste Strukturbauteil 12 und das zweite Strukturbauteil 13 aufweisen.

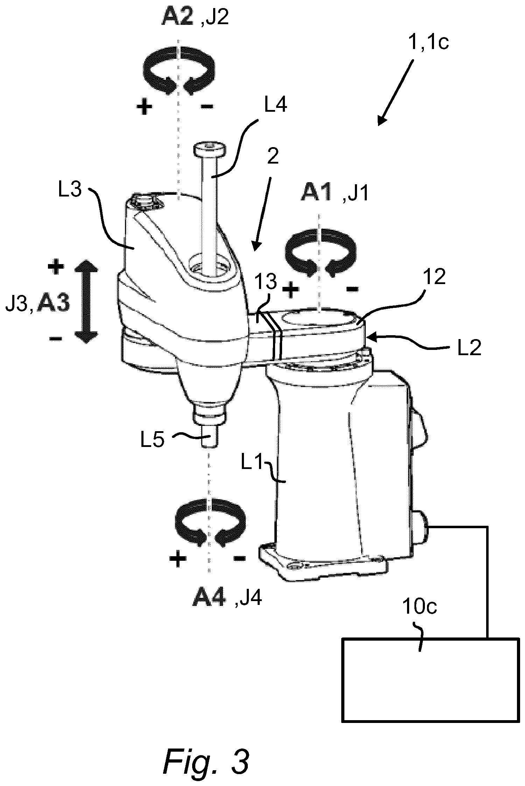

Die Fig. 3 zeigt einen Roboter 1 in einer beispielhaften Ausführung als ein so genannter SCARA-Roboter 1c, der einen Manipulatorarm 2 und eine Robotersteuerung 10c aufweist. Der Manipulatorarm 2 umfasst im Falle des vorliegenden Ausführungsbeispiels fünf, nacheinander angeordnete und mittels Gelenke J1-J4 drehbar miteinander verbundene Glieder L1-L5. Im Falle des in Fig. 3 gezeigten Ausführungsbeispiels kann repräsentativ für jedes der Glieder L1 bis L5 beispielsweise das Glied L2 das erste Strukturbauteil 12 und das zweite Strukturbauteil 13 aufweisen.

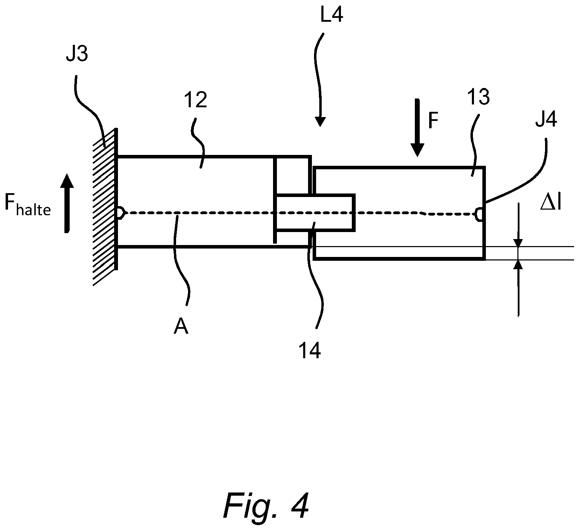

Das in Fig. 4 schematisch gezeigte Glied L4 weist das erste Strukturbauteil 12, das zweite Strukturbauteil 13 und eine zugeordnete Kraftmesseinrichtung 14 auf. Das erste Strukturbauteil 12 ist in Fig. 4 zum leichteren Verständnis als feste Einspannung dargestellt, welche jedoch ein in der kinematischen Kette dem Glied L4 vorgelagertes Gelenk J3 entsprechen kann. Demgemäß wirkt eine Kraft F auf das zweite Strukturbauteil 13, welche beispielsweise über das in der kinematischen Kette dem Glied L4 nachgelagerte Gelenk J4 eingeleitet wird.

Die Kraftmesseinrichtung 14 ist ausgebildet, die Kraft F an dem Glied L4 in einer vorgegebenen Richtung, d.h. hier über den Verstellweg Δl quer zur Abstandsgeraden A von dem vorgelagerten Gelenk J3 zu dem nachgelagerten Gelenk J4 zu messen. Das erste Strukturbauteil 12 ist demgemäß mit dem in der kinematischen Gelenkskette des Roboterarms 2 dem Glied L4 unmittelbar vorgelagerten Gelenk J3 des Roboterarms 2 verbunden. Das zweite Strukturbauteil 13 ist demgemäß mit dem in der kinematischen Gelenkskette des Roboterarms 2 dem Glied L4 unmittelbar nachgelagerten Gelenk J4 des Roboterarms 2 verbunden.

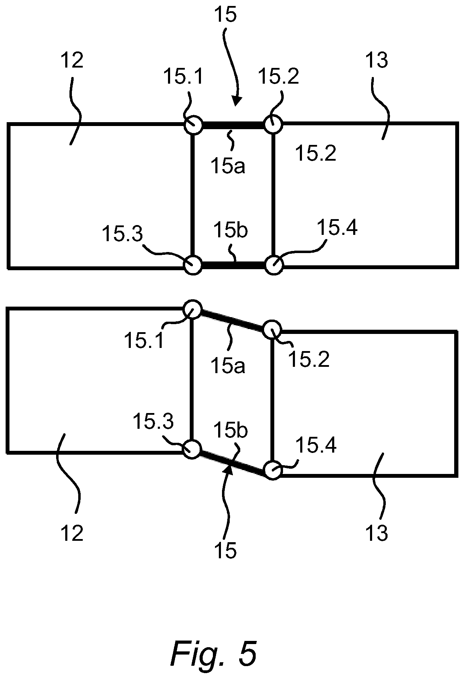

Wie in Fig. 5 schematisch gezeigt, ist das erste Strukturbauteil 12 mit dem zweiten Strukturbauteil 13 über eine Lageranordnung 15 verbunden, die ausgebildet ist, das erste Strukturbauteil 12 mit dem zweiten Strukturbauteil 13 lediglich unter Belassen eines einzigen Lagerfreiheitsgrades im Übrigen aber starr zu verbinden, wobei der einzige Lagerfreiheitsgrad ausgebildet ist, eine Beweglichkeit nur in derjenigen Richtung zuzulassen, in welcher die Kraftmesseinrichtung 14 eingerichtet ist, die Kraft F zu messen.

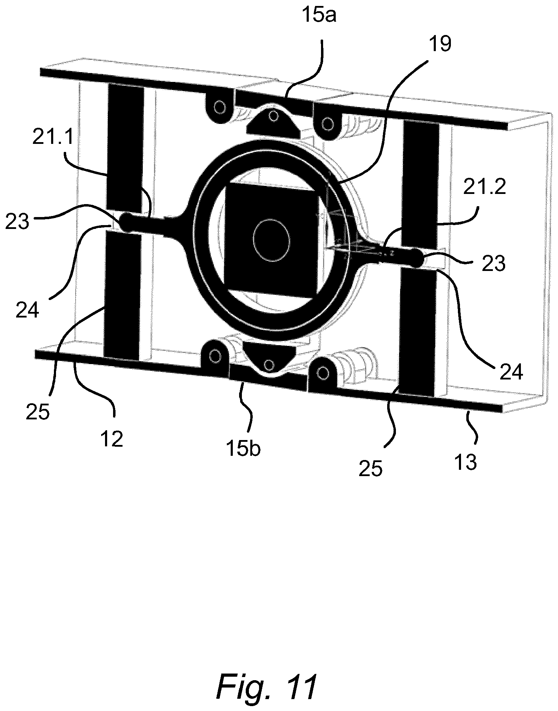

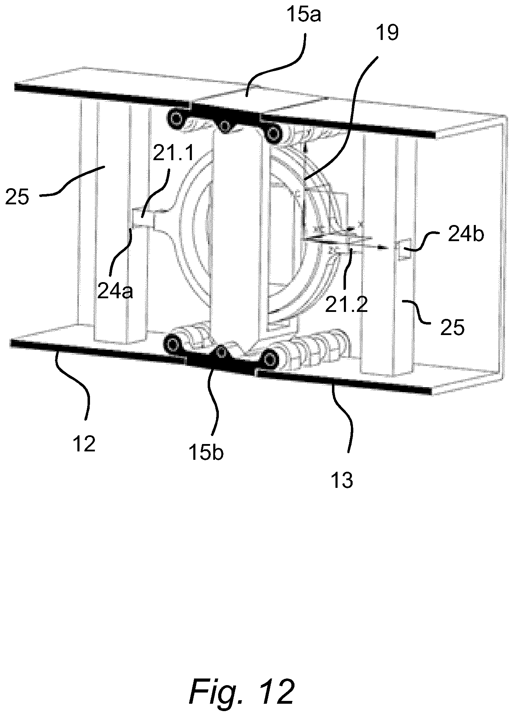

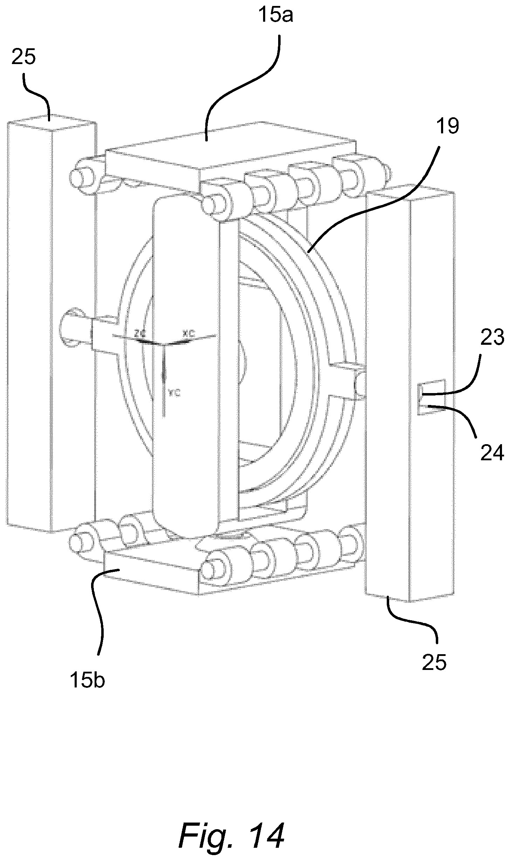

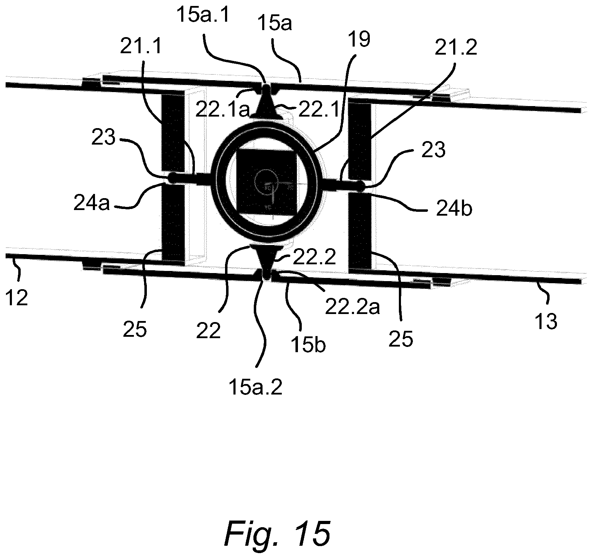

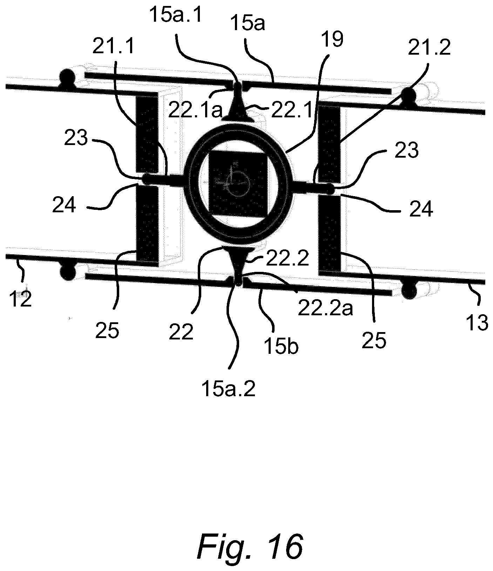

Die Lageranordnung 15 gemäß Fig. 4 bis Fig. 20 ist ausgebildet, ein Verschieben des ersten Strukturbauteils 12 relativ zum zweiten Strukturbauteil 12 senkrecht zu einer in der kinematischen Gelenkskette des Roboterarms 2 vom vorgelagerten Gelenk J3 (Fig.4) zum nachgelagerten Gelenk J4 (Fig.4) weisenden Abstandsgeraden A zu erlauben, also in Richtung des Verstellweges Δl(Fig.4).

Die Lageranordnung 15 weist im Falle der dargestellten Ausführungsbeispiele ein Viergelenk auf, welches ein erstes Viergelenks-Glied 15a mit einem ersten Eingangs-Gelenk 15.1 und einem ersten Ausgangs-Gelenk 15.2 aufweist und ein zweites Viergelenks-Glied 15b mit einem zweiten Eingangs-Gelenk 15.3 und einem zweiten Ausgangs-Gelenk 15.4 aufweist, wobei das erste Eingangs-Gelenk 15.1 und das zweite Eingangs-Gelenk 15.3 mit dem ersten Strukturbauteil 12 verbunden ist und das erste Ausgangs-Gelenk 15.2 und das zweite Ausgangs-Gelenk 15.4 mit dem zweiten Strukturbauteil 13 verbunden ist. Das demgemäß gelagerte Segment wird insoweit im Wesentlichen in Kraftrichtung verschoben, jedoch aufgrund der Kinematik auch um ein geringfügiges Stück senkrecht zur Kraftrichtung verschoben.

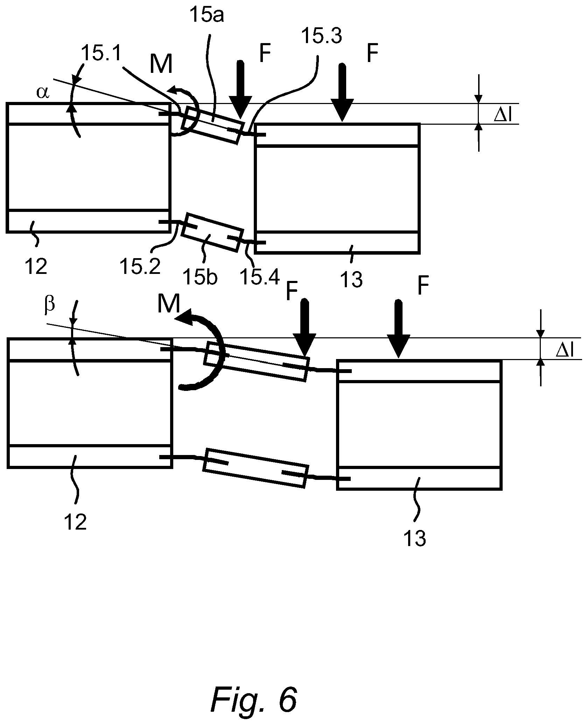

Die Gelenke 15.1-15.4 des Viergelenks, insbesondere das erste Eingangs-Gelenk 15.1, das erste Ausgangs-Gelenk 15.2, das zweite Eingangs-Gelenk 15.3 und das zweite Ausgangs-Gelenk 15.4, sind im Falle der Ausführungsvariante gemäß Fig. 6 als Biegegelenke ausgebildet, die lediglich eine Verschiebung des ersten Strukturbauteils 12 relativ zum zweiten Strukturbauteil 13 senkrecht zur in der kinematischen Gelenkskette des Roboterarms 2 vom vorgelagerten Gelenk J3 zum nachgelagerten Gelenk J4 weisenden Abstandsgeraden A erlauben, wobei ein Verdrehen des ersten Strukturbauteils 12 relativ zum zweiten Strukturbauteil 13, insbesondere um eine parallel zur Abstandsgeraden A laufenden Drehachse verhindern.

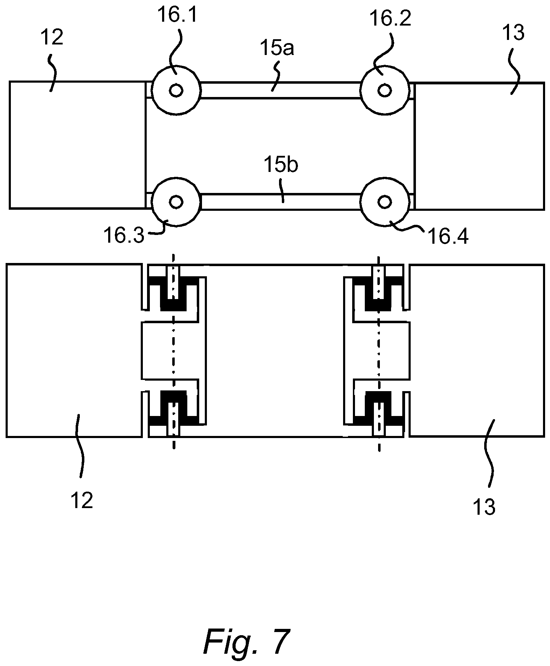

Die Fig. 7 zeigt eine schematische Darstellung einer beispielhaften Variante einer alternativen Lageranordnung 15 mit Schubelementen 16.1 bis 16.4.

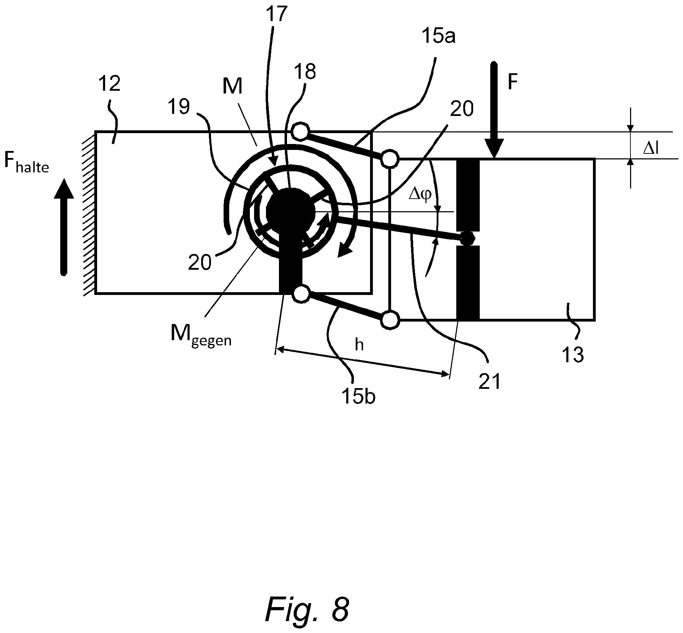

Die Fig. 8 bis Fig. 16 und Fig. 20 zeigen Varianten, bei denen die Kraftmesseinrichtung 15 einen Drehmomentsensor 17 aufweist, welcher einen Innenflansch 18, einen Außenflansch 19 und den Innenflansch 18 mit dem Außenflansch 19 verbindende Verbindungstege 20 umfasst, welche mit Dehnmesssensoren versehen sind, wobei der Drehmomentsensor 17 einen mit dem Außenflansch 19 verbundenen Hebel 21 aufweist, der mit dem zweiten Strukturbauteil 13 verbunden ist.

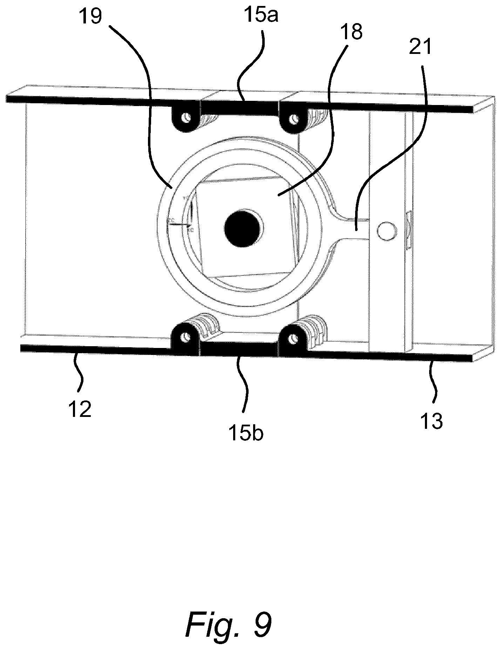

Wie in der Variante gemäß Fig. 9 gezeigt ist, ist im Falle dieses Ausführungsbeispiels der Innenflansch 18 mit dem ersten Strukturbauteil 12 verbunden.

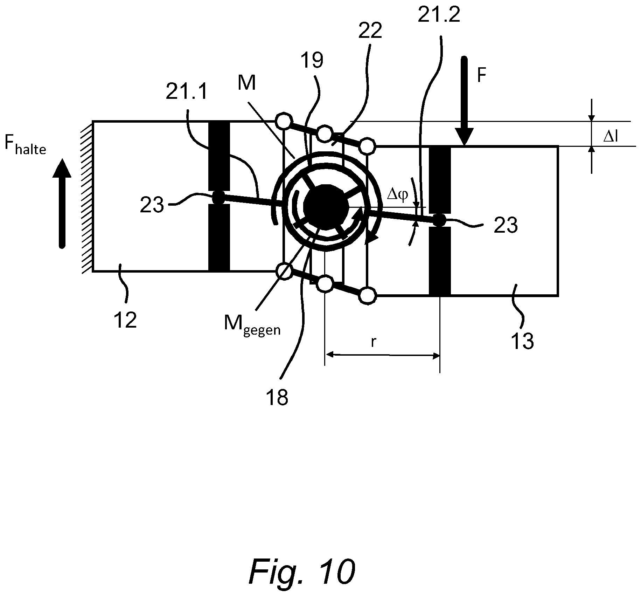

Die Fig. 10 zeigt eine Variante, bei welcher der Innenflansch 18 des Drehmomentsensors 17 mit einem Zwischensegment 22 verbunden ist, welches einerseits über ein erstes Viergelenk mit dem ersten Strukturbauteil 12 gekoppelt ist und andererseits über ein zweites Viergelenk mit dem zweiten Strukturbauteil 13 gekoppelt ist, wobei der Außenflansch 19 zwei Hebel 21.1 und 21.2 aufweist, von denen ein Hebel 21.1 mit dem ersten Strukturbauteil 12 verbunden ist und der andere Hebel 21.2 mit dem zweiten Strukturbauteil 13 verbunden ist.

Wie in der Varianten gemäß Fig. 10 bis Fig. 16 gezeigt ist, kann der Hebel 21.1, 21.2 jeweils eine Zapfen, insbesondere einen Kugelkopfzapfen 23 aufweisen, welcher in eine Ausnehmung 24, insbesondere eine Bohrung, ein Langloch, ein Quadratloch oder ein Rechteckloch einer Gelenksstange 25 eingreift, die mit dem ersten Strukturbauteil 12 bzw. mit dem zweiten Strukturbauteil 13 verbunden ist.

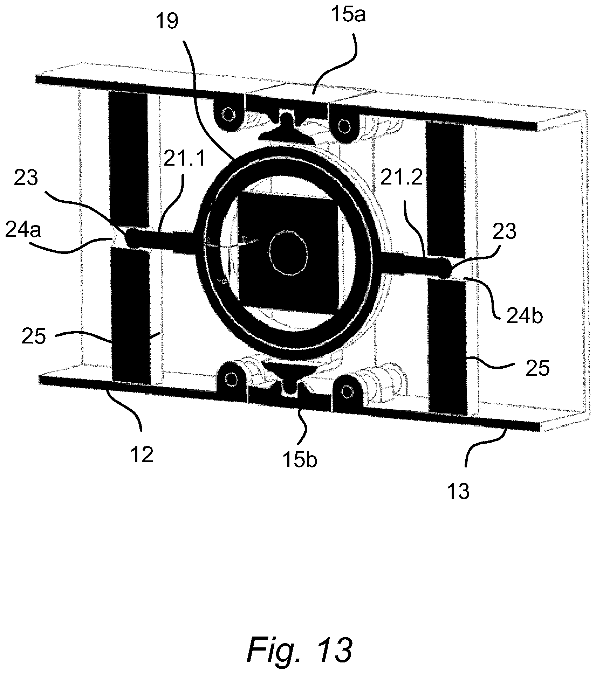

In Fig. 13 ist dargestellt, wie der Sensor Querkraftentkoppelt gelagert werden kann. Das Zwischensegment wird durch die Führung in den Schwingen eindeutig auf einer Geraden, senkrecht zur Verbindungsgeraden A, wie in Fig. 4 gezeigt, geführt und kann auf dieser rotieren und linear verschoben werden. Der eine Hebel des Außenrings des Sensors wird in vier Kraftrichtungen, d.h. von oben, von unten, von vorne und von hinten) gehalten und der andere Hebel wird in zwei Kraftrichtungen, d.h. von oben und von unten gehalten.

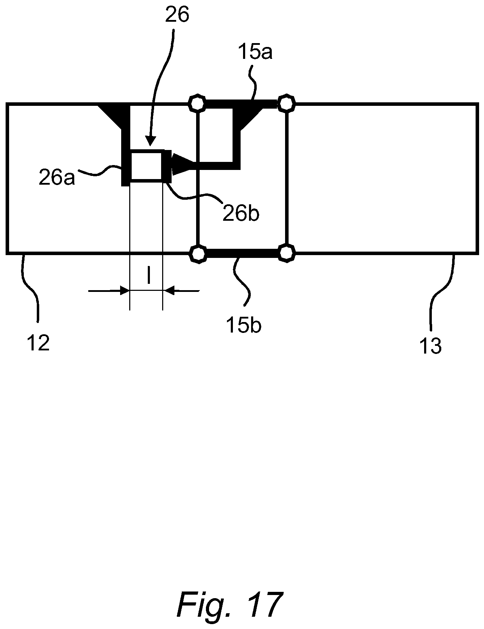

Statt eines Momentsensors 17 kann, wie in den Varianten gemäß Fig. 17 bis Fig. 19 gezeigt, die Kraftmesseinrichtung 14 einen Kraftsensor 26 aufweisen.

In der Variante gemäß Fig. 17 weist die Kraftmesseinrichtung 14 einen Kraftsensor 26 auf, welcher einen ersten Sensorflansch 26a aufweist, der mit dem ersten Strukturbauteil 12 verbunden ist und einen zweiten Sensorflansch 26b aufweist, der mit dem ersten Viergelenks-Glied 15a verbunden ist.

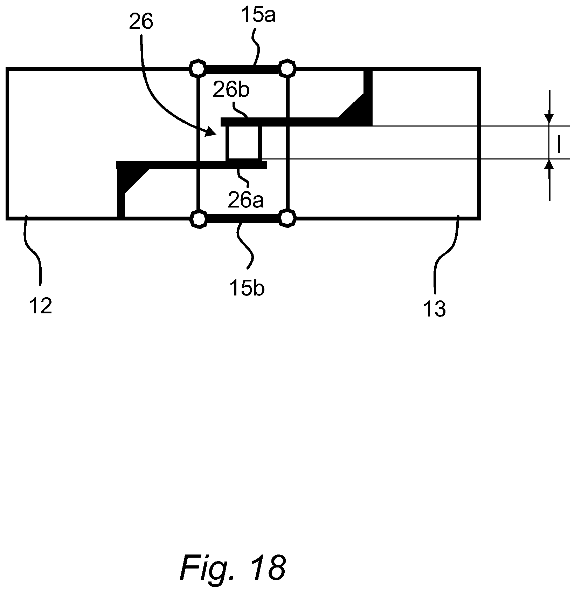

In der Variante gemäß Fig. 18 weist die Kraftmesseinrichtung 14 einen Kraftsensor 26 auf, welcher einen ersten Sensorflansch 26a aufweist, der mit dem ersten Strukturbauteil 12 verbunden ist und einen zweiten Sensorflansch 26b aufweist, der mit dem zweiten Strukturbauteil 13 verbunden ist, wobei der Kraftsensor 26 zur Kraftmessung in Querrichtung eingekoppelt ist.

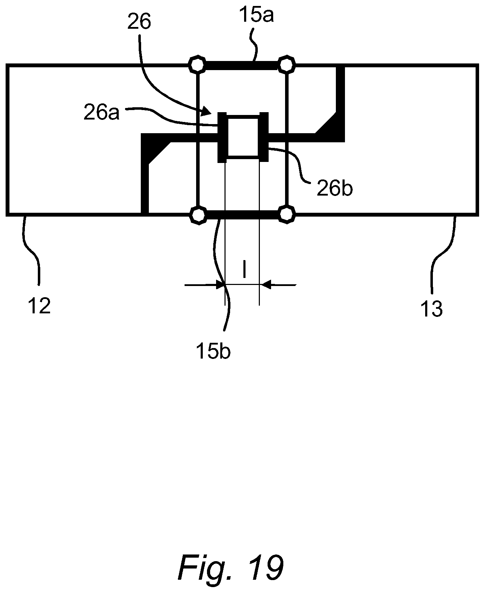

In der Variante gemäß Fig. 19 weist die Kraftmesseinrichtung 14 einen Kraftsensor 26 auf, welcher einen ersten Sensorflansch 26a aufweist, der mit dem ersten Strukturbauteil 12 verbunden ist und einen zweiten Sensorflansch 26b aufweist, der mit dem zweiten Strukturbauteil 13 verbunden ist, wobei der Kraftsensor 26 zur Kraftmessung in Längsrichtung eingekoppelt ist.

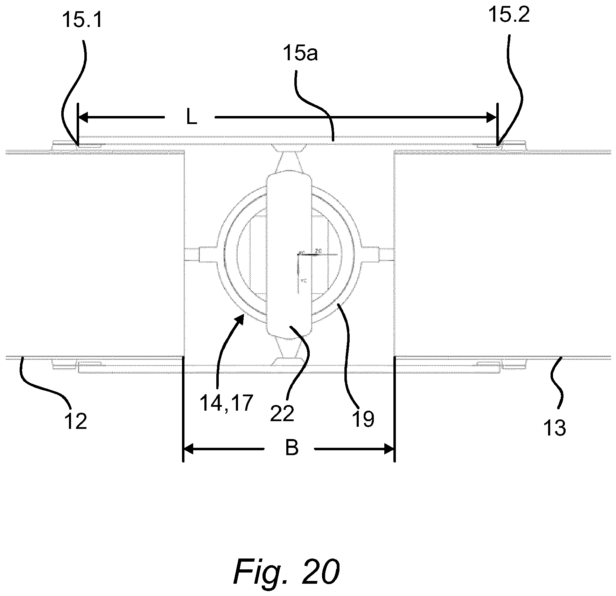

Wie insbesondere in Fig. 20 gezeigt ist, kann das erste Viergelenks-Glied 15a und das zweite Viergelenks-Glied 15b jeweils eine Länge L in Längserstreckung des Gliedes L1-L7 des Roboterarms 2 aufweisen, die größer ist, als der Abstand B von erstem Strukturbauteil 12 und zweitem Strukturbauteil 13, innerhalb welchem Abstand B die Kraftmesseinrichtung 14, insbesondere der Drehmomentsensor 17 angeordnet ist.

## Patentansprüche

1. Roboter, aufweisend eine Robotersteuerung (10), die ausgebildet und eingerichtet ist, ein Roboterprogramm auszuführen, und aufweisend einen Roboterarm (2) mit wenigstens drei durch Glieder (L1-L8) verbundene Gelenke (J1-J6), sowie aufweisend eine den wenigstens drei Gelenken (J1-J6) entsprechende Anzahl von Antrieben (M1-M6), von denen jeder Antrieb M1-M6)zum Verstellen eines ihm zugeordneten Gelenks (J1-J6) der wenigstens drei Gelenke (J1-J6) ausgebildet und gemäß des Roboterprogramms automatisiert oder in einem Handfahrbetrieb durch die Robotersteuerung (10) antreibbar ist, um das zugeordnete Gelenk (J1-J6) automatisch zu verstellen, wobei wenigstens eines der Glieder (L1-L8) aufweist:
- eine Kraftmesseinrichtung (14), die ausgebildet ist, eine Kraft an dem Glied (L1-L8) in einer vorgegebenen Richtung zu messen,
- ein erstes Strukturbauteil, welches mit einem in der kinematischen Gelenkskette des Roboterarms (2) dem Glied (L1-L8) unmittelbar vorgelagerten Gelenk (J1-J6) des Roboterarms (2) verbunden ist,
- ein zweites Strukturbauteil, welches mit einem in der kinematischen Gelenkskette des Roboterarms (2) dem Glied (L1-L8) unmittelbar nachgelagerten Gelenk (J1-J6) des Roboterarms (2) verbunden ist, und
- eine das erste Strukturbauteil (12) mit dem zweiten Strukturbauteil (13) verbindende Lageranordnung (15), die ausgebildet ist, das erste Strukturbauteil (12) mit dem zweiten Strukturbauteil (13) lediglich unter Belassen eines einzigen Lagerfreiheitsgrades starr zu verbinden,
- wobei der einzige Lagerfreiheitsgrad ausgebildet ist, eine Beweglichkeit nur in derjenigen Richtung zuzulassen, in welcher die Kraftmesseinrichtung (14) eingerichtet ist, die Kraft zu messen,
- die Lageranordnung (15) ausgebildet ist, ein Verschieben des ersten Strukturbauteils (12) relativ zum zweiten Strukturbauteil (13) senkrecht zu einer in der kinematischen Gelenkskette des Roboterarms (2) vom vorgelagerten Gelenk (J1-J6) zum nachgelagerten Gelenk (J1-J6) weisenden Abstandsgeraden (A) zu erlauben,
- die Lageranordnung (15) ein Viergelenk aufweist, welches ein erstes Viergelenks-Glied (15a) mit einem ersten Eingangs-Gelenk (15.1) und einem ersten Ausgangs-Gelenk (15.2) aufweist und ein zweites Viergelenks-Glied (15b) mit einem zweiten Eingangs-Gelenk (15.3) und einem zweiten Ausgangs-Gelenk (15.4) aufweist, wobei das erste Eingangs-Gelenk (15.1) und das zweite Eingangs-Gelenk (15.3) mit dem ersten Strukturbauteil (12) verbunden ist und das erste Ausgangs-Gelenk (15.2) und das zweite Ausgangs-Gelenk (15.4) mit dem zweiten Strukturbauteil (13) verbunden ist, und
- das erste Viergelenks-Glied (15a) und das zweite Viergelenks-Glied (15b) jeweils eine Länge (L) in Längserstreckung des Gliedes (L1-L7) des Roboterarms (2) aufweist, die größer ist, als der Abstand (B) zwischen dem ersten Strukturbauteil (12) und dem zweiten Strukturbauteil (13), innerhalb welchem Abstand (B) die Kraftmesseinrichtung (14) angeordnet ist.

2. Roboter nach Anspruch 1, **dadurch gekennzeichnet, dass** die Gelenke (15.1-15.4) des Viergelenks, insbesondere das erste Eingangs-Gelenk (15.1), das erste Ausgangs-Gelenk (15.2), das zweite Eingangs-Gelenk (15.3) und das zweite Ausgangs-Gelenk (15.4) Biegegelenke sind, die ausgebildet sind, lediglich eine Verschiebung des ersten Strukturbauteils (12) relativ zum zweiten Strukturbauteil (13) senkrecht zur in der kinematischen Gelenkskette des Roboterarms (2) vom vorgelagerten Gelenk (J1-J6) zum nachgelagerten Gelenk (J1-J6) weisenden Abstandsgeraden (A) zu erlauben, und ein Verdrehen des ersten Strukturbauteils (12) relativ zum zweiten Strukturbauteil (13), insbesondere um eine parallel zur Abstandsgeraden (A) laufenden Drehachse, zu verhindern.

3. Roboter nach Anspruch 1 oder 2, **dadurch gekennzeichnet, dass** die Kraftmesseinrichtung (14) einen Drehmomentsensor (17) und dessen Anbauflansche und/oder dessen Hebel (21.1, 21.2) aufweist.

4. Roboter nach Anspruch 3, **dadurch gekennzeichnet, dass** der Drehmomentsensor (17) einen Innenflansch (18) aufweist, der mit einem Zwischensegment (22) verbunden ist, welches einerseits über ein erstes Viergelenk, das ein erstes Viergelenks-Glied (15a) und ein zweites Viergelenks-Glied (15b) umfasst, mit dem ersten Strukturbauteil (12) gekoppelt ist und andererseits über ein zweites Viergelenk, das ein drittes Viergelenks-Glied und ein viertes Viergelenks-Glied umfasst, mit dem zweiten Strukturbauteil (13) gekoppelt ist, und der Drehmomentsensor (17) einen Außenflansch (19) aufweist, der zwei Hebel (21.1,21.2) umfasst, von denen ein erster Hebel (21.1) mit dem ersten Strukturbauteil (12) verbunden ist und der andere, zweite Hebel (21.2) mit dem zweiten Strukturbauteil (13) verbunden ist.

5. Roboter nach Anspruch 3 oder 4, **dadurch gekennzeichnet, dass** der Drehmomentsensor (17) einen Außenflansch (19) aufweist, der mit einem Zwischensegment (22) verbunden ist, welches einerseits über ein erstes Viergelenk, das ein erstes Viergelenks-Glied (15a) und ein zweites Viergelenks-Glied (15b) umfasst, mit dem ersten Strukturbauteil (12) gekoppelt ist und andererseits über ein zweites Viergelenk, das ein drittes Viergelenks-Glied und ein viertes Viergelenks-Glied umfasst, mit dem zweiten Strukturbauteil (13) gekoppelt ist, und der Drehmomentsensor (17) einen der Innenflansch (18) aufweist, der zwei Hebel (21.1,21.2) umfasst, von denen ein erster Hebel (21.1) mit dem ersten Strukturbauteil (12) verbunden ist und der andere, zweite Hebel (21.2) mit dem zweiten Strukturbauteil (13) verbunden ist.

6. Roboter nach einem der Ansprüche 4 oder 5, **dadurch gekennzeichnet, dass** die Kraftmesseinrichtung (14) einen Kraftsensor (26) aufweist, welcher einen ersten Sensorflansch (26a) aufweist, der mit dem ersten Strukturbauteil (12) oder dem zweiten Strukturbauteil (13) verbunden ist und einen zweiten Sensorflansch (26b) aufweist, der mit dem ersten Viergelenks-Glied (15a) oder dem zweiten Viergelenks-Glied (15b) verbunden ist und die beiden Sensorflansche ausgebildet sind, sich in Messrichtung der dazwischen liegenden Kraftmesseinrichtung zu bewegen, bei einer Beaufschlagung des ersten Strukturbauteils (12) oder des zweiten Strukturbauteils (13) mit einer Kraft in Messrichtung, die eine Verschiebung des ersten Strukturbauteils (12) und/oder des zweiten Strukturbauteils (13) in Messrichtung zur Folge hat.

7. Roboter nach einem der Ansprüche 4 oder 5, **dadurch gekennzeichnet, dass** die Kraftmesseinrichtung (14) einen Kraftsensor (26) aufweist, welcher einen ersten Sensorflansch (26a) aufweist, der mit dem ersten Strukturbauteil (12) verbunden ist und einen zweiten Sensorflansch (26b) aufweist, der mit dem zweiten Strukturbauteil (13) verbunden ist und die beiden Sensorflansche ausgebildet sind, sich in Messrichtung der dazwischen liegenden Kraftmesseinrichtung zu bewegen, bei einer Beaufschlagung des ersten Strukturbauteils (12) oder des zweiten Strukturbauteils (13) mit einer Kraft in Messrichtung, die eine Verschiebung des ersten Strukturbauteils (12) und/oder des zweiten Strukturbauteils (13) in Messrichtung zur Folge hat.

8. Roboter nach einem der Ansprüche 4 bis 7, **dadurch gekennzeichnet, dass** das erste Viergelenk (15a) eine im Querschnitt quadratische oder kreisförmige erste Ausnehmung (15a.1) mit einem Paar von jeweils zwei gegenüberliegenden Innenwänden aufweist und das Zwischensegment (22) einen ersten Schenkel (22.1) aufweist, der einen ersten Kugelkopf (22.1a) trägt, welcher in der ersten Ausnehmung (15a.1) derart eingefügt ist, dass das eine Paar der gegenüberliegenden Innenwände den ersten Kugelkopf (22.1a) in einer ersten Richtung führt und das andere Paar der gegenüberliegenden Innenwände den ersten Kugelkopf (22.1a) in einer zur ersten Richtung senkrecht angeordneten zweiten Richtung führt, welche beiden Richtungen senkrecht zur vorgegebenen Richtung angeordnet sind, in welcher die Kraftmesseinrichtung (14) die Kraft an dem Glied (L1-L8) misst und/oder das zweite Viergelenk (15b) eine im Querschnitt quadratische oder kreisförmige zweite Ausnehmung (15a.2) mit einem Paar von jeweils zwei gegenüberliegenden Innenwänden aufweist und das Zwischensegment (22) einen zweiten Schenkel (22.2) aufweist, der einen zweiten Kugelkopf (22.2a) trägt, welcher in der zweiten Ausnehmung (15a.2) derart eingefügt ist, dass das eine Paar der gegenüberliegenden Innenwände den zweiten Kugelkopf (22.2a) in einer ersten Richtung führt und das andere Paar der gegenüberliegenden Innenwände den zweiten Kugelkopf (22.2a) in einer zur ersten Richtung senkrecht angeordneten zweiten Richtung führt, welche beiden Richtungen senkrecht zur vorgegebenen Richtung angeordnet sind, in welcher die Kraftmesseinrichtung (14) die Kraft an dem Glied (L1-L8) misst.

9. Roboter nach einem der Ansprüche 4 bis 8, **dadurch gekennzeichnet, dass** die Kraftmesseinrichtung (14), insbesondere der Drehmomentsensor (17) mittels des ersten Hebels (21.1), des zweiten Hebels (21.2), des ersten Schenkels (22.1) und/oder des zweiten Schenkels (22.2) derart spannungsfrei gelagert ist, dass eine auf das erste Strukturbauteil und/oder auf das zweite Strukturbauteil einwirkende externe Kraft ausschließlich zu einer Torsionsbelastung an der Kraftmesseinrichtung (14) bzw. dem Drehmomentsensor (17) führt.

10. Roboter nach einem der Ansprüche 1 bis 9, **dadurch gekennzeichnet, dass** die Kraftmesseinrichtung (14) einen Drehmomentsensor (17) aufweist, welcher einen Innenflansch (18), einen Außenflansch (19) und den Innenflansch (18) mit dem Außenflansch (19) verbindende Verbindungstege (20) umfasst, welche mit Messsensoren, insbesondere Dehnmesssensoren versehen sind, wobei der Drehmomentsensor (17) einen mit dem Außenflansch (19) verbundenen ersten Hebel (21.1) aufweist, der mit dem ersten Strukturbauteil (12) verbunden ist, und einen mit dem Außenflansch (19) verbundenen zweiten Hebel (21.2) aufweist, der mit dem zweiten Strukturbauteil (13) verbunden ist.

11. Roboter nach einem der Ansprüche 1 bis 10, **dadurch gekennzeichnet, dass** die Kraftmesseinrichtung (14) einen Drehmomentsensor (17) aufweist, welcher einen Innenflansch (18), einen Außenflansch (19) und den Innenflansch (18) mit dem Außenflansch (19) verbindende Verbindungstege (20) umfasst, welche mit Messsensoren, insbesondere Dehnmesssensoren versehen sind, wobei der Drehmomentsensor (17) einen mit dem Innenflansch (19) verbundenen ersten Hebel (21.1) aufweist, der mit dem ersten Strukturbauteil (12) verbunden ist, und einen mit dem Außenflansch (19) verbundenen zweiten Hebel (21.2) aufweist, der mit dem zweiten Strukturbauteil (13) verbunden ist.

12. Roboter nach Anspruch 10 oder 11, **dadurch gekennzeichnet, dass** der erste Hebel (21.1) einen Zapfen, insbesondere einen Kugelkopfzapfen (23a) aufweist, welcher in eine Ausnehmung (24), insbesondere ein Quadratloch oder eine Bohrung (24a) des ersten Strukturteils (12) bzw. einer ersten Gelenksstange (25a) eingreift, und dass der zweite Hebel (21.2) einen Zapfen, insbesondere einen Kugelkopfzapfen (23b) aufweist, welcher in eine Ausnehmung (24), insbesondere ein Rechteckloch (24b) des zweiten Strukturteils (13) bzw. einer zweiten Gelenksstange (25b) eingreift.

13. Roboter nach Anspruch 10 oder 11, **dadurch gekennzeichnet, dass** der erste Hebel (21.1) einen Zapfen, insbesondere einen Kugelkopfzapfen (23a) aufweist, welcher in eine Ausnehmung (24), insbesondere ein Quadratloch oder eine Bohrung (24a) des zweiten Strukturteils (13) bzw. einer zweiten Gelenksstange (25b) eingreift, und dass der zweite Hebel (21.2) einen Zapfen, insbesondere einen Kugelkopfzapfen (23b) aufweist, welcher in eine Ausnehmung (24), insbesondere ein Rechteckloch (24a) des ersten Strukturteils (12) bzw. einer ersten Gelenksstange (25a) eingreift.

14. Roboter nach einem der Ansprüche 1 bis 13, **dadurch gekennzeichnet, dass** die Lageranordnung (15) durch die Kraftmesseinrichtung (14) gebildet wird.

## Claims

1. Robot, comprising a robot controller (10), which is designed and configured to execute a robot program and comprising a robot arm (2) with at least three joints (J1-J6) which are connected by links (L1-L8), and comprising a plurality of drives (M1-M6) corresponding to the at least three joints (J1-J6), wherein each drive (M1-M6) is configured to adjust one of the joints (J1-J6) of the at least three joints (J1-J6) assigned to it and is actuated in an automated manner in accordance with the robot program or in a manual drive mode by the robot controller (10) in order to automatically adjust the associated joint (J1-J6), wherein at least a first one of the links (L1-L8) comprises:
- a force measuring device (14) which is configured to measure a force on the link (L1-L8) in a predetermined direction,
- a first structural component which is connected to a joint (J1-J6) of the robot arm (2) that is mounted in the kinematic joint chain of the robot arm (2) directly upstream from the link (L1-L8),
- a second structural component which is connected to a joint (J1-J6) of the robot arm (2) that is mounted in the kinematic joint chain of the robot arm (2) directly downstream from the link (L1-L8), and
- a bearing arrangement (15) connecting the first structural component (12) to the second structural component (13) and which is configured to rigidly connect the first structural component (12) to the second structural component (13), leaving only one degree of freedom,
- wherein the one degree of freedom of the bearing is configured to permit mobility only in the direction in which the force measuring device (14) is configured to measure the force,
- the bearing arrangement (15) is configured to permit a displacement of the first structural component (12) relative to the second structural component (13) in a direction perpendicular to a spacing straight line (A) extending in the kinematic joint chain of the robot arm (2) from the upstream joint (J1-J6) to the downstream joint (J1-J6),
- the bearing arrangement (15) includes a four-bar linkage, which has a first four-bar link (15a) with a first input joint (15.1) and a first output joint (15.2) and a second four-bar link (15b) with a second input joint (15.3) and a second output joint (15.4), wherein the first input joint (15.1) and the second input joint (15.3) are connected to the first structural component (12), and the first output joint (15.2) and the second output joint (15.4) are connected to the second structural component (13), and
- the first four-bar link (15a) and the second four-bar link (15b) each have a length (L) in the longitudinal extension of the link (L1-L7) of the robot arm (9), which is greater than the distance (B) between the first structural component (12) and the second structural component (13) within which distance (N) the force measuring device is arranged.

2. Robot according to claim 1, **characterised in that** the joints (15.1-15.4) of the four-bar linkage, in particular the first input joint (15.1), the first output joint (15.2), the second input joint (15.3) and the second output joint (15.4) are bending joints, which are designed to only allow a displacement of the first structural component (12) relative to the second structural component (13) perpendicular to the spacing straight line (A) in the kinematic joint chain of the robot arm (2) extending from the upstream joint (J1-J6) to the downstream joint (J1-J6), and to prevent a rotation of the first structural component (12) relative to the second structural component (13), in particular about an axis of rotation parallel to the spacing straight line (A).

3. Robot according to claim 1 or 2, **characterised in that** the force measuring device (14) comprises a torque sensor (17) and its mounting flanges and/or its levers (21.1, 21.2).

4. Robot according to claim 3, **characterised in that** the torque sensor (17) comprises an inner flange (18), which is connected to an intermediate segment (22) that is coupled to the first structural component (12) on the one hand via a first four-bar linkage, which comprises a first four-bar link (15a) and a second four-bar link (15b), and on the other hand via a second four-bar linkage, which comprises a third four-bar link and a fourth four-bar link, and the torque sensor (17) comprises an outer flange (19), which includes two levers (21.1, 21.2), a first lever (21.1) of which is connected to the first structural component (12) and the other, second lever (21.2) is connected to the second structural component (13).

5. Robot according to claim 3 or 4, **characterised in that** the torque sensor (17) comprises an outer flange (19) which is connected to an intermediate segment (22) that is coupled to the first structural component (12) on the one hand via a first four-bar linkage that comprises a first four-bar link (15a) and a second four-bar link (15b), and on the other hand is coupled to the second structural component (13) via a second four-bar linkage, which comprises a third four-bar link and a fourth four-bar link, and the torque sensor (17) comprises an inner flange (18) which includes two levers (21.1, 21.2), wherein a first lever (21.1) is connected to the first structural component (12) and the other second lever (21.2) is connected to the second structural component (13).

6. Robot according to any of claims 4 or 5, **characterised in that** the force measuring device (14) comprises a force sensor (26), which comprises a first sensor flange (26) which is connected to the first structural component (12) or to the second structural component (13) and a second sensor flange (26b) which is connected to the first four-bar link (15a) or to the second four-bar link (15b) and the two sensor flanges are configured to move in measuring direction of the interposed force measuring device when a force is applied to the first structural component (12) or to the second structural component (13) in measuring direction that results in a displacement of the first structural component (12) and/or the second structural component (13) in measuring direction.

7. Robot according of any of claims 4 or 5, **characterised in that** the force measuring device (14) comprises a force sensor (26), which comprises a first sensor flange (26a) which is connected to the first structural component (12) and
a second sensor flange (26b) which is connected to the second structural component (13) and the two sensor flanges are configured to move in measuring direction of the interposed force measuring device when a force is applied to the first structural component (12) or to the second structural component (13) in measuring direction that results in a displacement of the first structural component (12) and/or the second structural component (13) in measuring direction.

8. Robot according of any of claims 4 to 7, **characterised in that** the first four-bar linkage (15a) comprises a first recess (15a.1), which is square or circular in cross-section, with a pair of two respective opposite inner walls, and the intermediate segment (22) comprises a first leg (22.1) which holds a first ball head (22.1a), which is inserted into the first recess (15a.1) in such a way that the one pair of opposite inner walls guides the first ball head (22.1a) in a first direction and the other pair of opposite inner walls guides the first ball head (22.1a) in a second direction perpendicular to the first direction, which both directions are arranged perpendicular to the predetermined direction in which the force measuring device (14) measures the force on the link (L1-L8) and/or
the second four-bar linkage (15b) comprises a second recess (15a.2), which is square or circular in cross-section, with a pair of two respective opposite inner walls, and
the intermediate segment (22) comprises a second leg (22.2) which holds a second ball head (22.2a), which is inserted in the second recess (15a.2) in such a way that the one pair of opposite inner walls guides the second ball head (22.2a) in a first direction and the other pair of opposite inner walls guides the second ball head (22.2a) in a second direction perpendicular to the first direction, which two directions are arranged perpendicular to the predetermined direction in which the force measuring device (14) measures the force on the link (L1-L8).

9. Robot according to any of claims 4 to 8, **characterised in that** the force measuring device (14), in particular the torque sensor (17) is mounted by means of the first lever (21.1), of the second lever (21.2), of the first leg (22.1) and/or the second leg (22.2) in a tension free manner such that an external force acting on the first structural component and/or on the second structural component leads exclusively to a torsional load on the force measuring device (14) or the torque sensor (17).

10. Robot according to any of claims 1 to 9, **characterised in that** the force measuring device (14) comprises a torque sensor (17), which comprise an inner flange (18), and outer flange (19) and connecting crosspieces (20) connecting the inner flange (18) to the outer flange (19), which are provided with measurement sensors, in particular wireless pressure sensors, wherein the torque sensor (17) comprises a first lever (21.1) connected the outer flange (19) which lever is connected to the first structural component (12) and comprises a second lever (21.2) connected to the outer flange (19) which lever is connected to the second structural component (13).

11. Robot according to any of claims 1 to 10, **characterised in that** the force measuring device (14) comprises a torque sensor (17), which comprises an inner flange (18), an outer flange (19) and connecting crosspieces (20) connecting the inner flange (18) to the outer flange (19), which are provided with measuring sensors, specifically wireless pressure sensors, wherein the torque sensor (17) has a first lever (21.1) connected to the inner flange (18), which lever is connected to the first structural component (12) and a second lever (21.2) connected to the outer flange (19) which is connected to the second structural component (13).

12. Robot according to claim 10 or 11, **characterised in that** the first lever (21.1) comprises a pin, specifically a ball-headed pin (23a), which engages in a recess (24), specifically a square hole or a bore (24a) of the first structural part (12) or a first joint rod (25a), and **in that** the second lever (21.2) comprises a pin, specifically a ball-headed pin (23b), which engages in a recess (24), specifically a rectangular hole (24b) of the second structural part (13) or in a second joint rod (25b).

13. Robot according to claim 10 or 11, **characterised in that** the first lever (21.1) comprises a pin, specifically a ball-headed pin (23a), which engages in a recess (24), specifically a square hole or a bore (24a) of the second structural part (13) or a second joint rod (25b) and **in that** the second lever (21.2) comprises a pin, specifically a ball-headed pin (23b), which engages in a recess (24), specifically a rectangular hole (24a) of the first structural part (12) or in a first joint rod (25a).

14. Robot according to any of claims 1 to 13, **characterised in that** the bearing arrangement (15) is formed by the force measuring device (14).

## Revendications

1. Robot, présentant une commande de robot (10) qui est réalisée et configurée pour exécuter un programme de robot, et présentant un bras de robot (2) avec au moins trois articulations (J1-J6) reliées par des membres (L1-L8), et présentant aussi un nombre d'entraînements (M1-M6) correspondant auxdits au moins trois articulations (J1-J6), dont chaque entraînement (M1-M6) est réalisé pour régler une articulation (J1-J6), qui lui est associée, desdites au moins trois articulations (J1-J6) et automatisé selon le programme de robot ou qui peut être entraîné par la commande de robot (10) dans un mode de fonctionnement manuel pour régler automatiquement l'articulation (J1-J6) associée, un des membres (L1-L8) présentant au moins :
- un dispositif de mesure de force (14) qui est réalisé pour mesurer une force sur le membre (L1-L8) dans une direction prédéterminée,
- un premier élément de structure qui est relié à une articulation (J1-J6) du bras de rotor (2) qui est directement montée en amont du membre (L1-L8) dans la chaîne d'articulation cinématique du bras de robot (2),
- un deuxième élément de structure qui est relié à une articulation (J1-J6) du bras de rotor (2) qui est directement montée en aval du membre (L1-L8) dans la chaîne d'articulation cinématique du bras de robot (2), et
- un agencement de palier (15) reliant le premier élément de structure (12) avec le deuxième élément de structure (13), qui est réalisé pour relier de manière rigide le premier élément de structure (12) avec le deuxième élément de structure (13) seulement en laissant un seul degré de liberté de palier,
- le seul degré de liberté de palier étant réalisé pour permettre une mobilité seulement dans la direction dans laquelle le dispositif de mesure de force (14) est configuré pour mesurer la force,
- l'agencement de palier (15) étant réalisé pour permettre un déplacement du premier élément de structure (12) par rapport au deuxième élément de structure (13) perpendiculairement à une droite d'espacement (A) orientée dans la chaîne d'articulation cinématique du bras de robot (2) depuis l'articulation (J1-J6) montée en amont jusqu'à l'articulation (J1J6) montée en aval,
- l'agencement de palier (15) présente un quadrilatère articulé qui présente un premier membre de quadrilatère articulé (15a) avec une première articulation d'entrée (15.1) et une première articulation de sortie (15.2) et présente un deuxième membre de quadrilatère articulé (15b) avec une deuxième articulation d'entrée (15.3) et une deuxième articulation de sortie (15.4), la première articulation d'entrée (15.1) et la deuxième articulation d'entrée (15.3) étant reliées avec le premier élément de structure (12), et la première articulation de sortie (15.2) et la deuxième articulation de sortie (15.4) étant reliées avec le deuxième élément de structure (13), et
- le premier membre de quadrilatère articulé (15a) et le deuxième membre de quadrilatère articulé (15b) présentant chacun une longueur (L) dans l'extension longitudinale du membre (L1-L7) du bras de robot (2), qui est supérieure à la distance (B) entre le premier élément de structure (12) et le deuxième élément de structure (13), distance (B) dans laquelle le dispositif de mesure de force (14) est agencé.

2. Robot selon la revendication 1, **caractérisé en ce que** les articulations (15.1 - 15.4) du quadrilatère articulé, en particulier la première articulation d'entrée (15.1), la première articulation de sortie (15.2), deuxième articulation d'entrée (15.3), la deuxième articulation de sortie (15.4) sont des articulations de flexion qui sont réalisées pour permettre seulement un déplacement du premier élément de structure (12) par rapport au deuxième élément de structure (13) perpendiculairement à la droite d'espacement (A) orientée dans la chaîne d'articulation cinématique du bras de robot (2) depuis l'articulation (J1-J6) montée en amont jusqu'à l'articulation (J1-J6) montée en aval, et pour empêcher une rotation du premier élément de structure (12) par rapport au deuxième élément de structure (13), en particulier autour d'un axe de rotation s'étendant parallèlement à la droite d'espacement (A).

3. Robot selon les revendications 1 ou 2, **caractérisé en ce que** le dispositif de mesure de force (14) présente un capteur de couple (17) et ses brides de montage et/ou ses leviers (21.1, 21.2).

4. Robot selon la revendication 3, **caractérisé en ce que** le capteur de couple (17) présente une bride intérieure (18) qui est reliée à un segment intermédiaire (22) qui est accouplé d'une part au premier élément de structure (12) via un premier quadrilatère articulé qui comprend un premier membre de quadrilatère articulé (15a) et un deuxième membre de quadrilatère articulé (15b), et qui est accouplé d'autre part au deuxième élément de structure (13) via un deuxième quadrilatère articulé qui comprend un troisième membre de quadrilatère articulé et un quatrième membre de quadrilatère articulé, et le capteur de couple (17) présente une bride extérieure (19) qui comprend deux leviers (21.1, 21.2) dont un premier levier (21.1) est relié au premier élément de structure (12) et l'autre, le deuxième levier (21.2), est relié au deuxième élément de structure (13).

5. Robot selon les revendications 3 ou 4, **caractérisé en ce que** le capteur de couple (17) présente une bride extérieure (19) qui est reliée avec un segment intermédiaire (22) qui est accouplé d'une part au premier élément de structure (12) via un premier quadrilatère articulé qui comprend un premier membre de quadrilatère articulé (15a) et un deuxième membre de quadrilatère articulé (15b), et qui est accouplé d'autre part au deuxième élément de structure (13) via un deuxième quadrilatère articulé qui comprend un troisième membre de quadrilatère articulé et un quatrième membre de quadrilatère articulé, et le capteur de couple (17) présente une bride intérieure (18) qui comprend deux leviers (21.1, 21.2) dont un premier levier (21.1) est relié au premier élément de structure (12) et l'autre, le deuxième levier (21.2) est relié au deuxième élément de structure (13).

6. Robot selon les revendications 4 ou 5, **caractérisé en ce que** le dispositif de mesure de force (14) présente un capteur de force (26) qui présente une première bride de capteur (26a) qui est reliée avec le premier élément de structure (12) ou le deuxième élément de structure (13), et une deuxième bride de capteur (26b) qui est reliée avec le premier membre de quadrilatère articulé (15a) ou avec le deuxième membre de quadrilatère articulé (15b), et les deux brides de capteur sont réalisées pour se déplacer en direction de mesure du dispositif de mesure de force se trouvant entre elles, lors d'une sollicitation du premier élément de structure (12) ou du deuxième élément de structure (13) avec une force en direction de mesure qui a pour conséquence un déplacement du premier élément de structure (12) et/ou du deuxième élément de structure (13) en direction de mesure.

7. Robot selon les revendications 4 ou 5, **caractérisé en ce que** le dispositif de mesure de force (14) présente un capteur de force (26) qui présente une première bride de capteur (26a) qui est reliée avec le premier élément de structure (12) et une deuxième bride de capteur (26b) qui est reliée avec le deuxième élément de structure (13), et les deux brides de capteur sont réalisées pour se déplacer en direction de mesure du dispositif de mesure de force se trouvant entre elles, lors d'une sollicitation du premier élément de structure (12) ou du deuxième élément de structure (13) avec une force en direction de mesure qui a pour conséquence un déplacement du premier élément de structure (12) et/ou du deuxième élément de structure (13) en direction de mesure.

8. Robot selon l'une des revendications 4 à 7, **caractérisé en ce que** le premier quadrilatère articulé (15a) présente un premier évidement (15a.1) de section transversale carrée ou circulaire avec une paire de deux parois intérieures respectivement opposées, et le segment intermédiaire (22) présente une première branche (22.1) qui porte une première tête sphérique (22.1a) qui est insérée de telle manière dans le premier évidement (15a.1) que ladite une paire de parois intérieures opposées guide la première tête sphérique (22.1a) dans une première direction, et l'autre paire de parois intérieure opposées guide la première tête sphérique (22.1a) dans une deuxième direction perpendiculaire à la première direction, les deux directions étant agencées perpendiculairement à la direction prédéterminée dans laquelle le dispositif de mesure de force (14) mesure la force sur le membre (L1-L8), et/ou le deuxième quadrilatère articulé (15b) présente un deuxième évidement (15a.2) de section transversale carrée ou circulaire avec une paire de deux parois intérieures respectivement opposées, et le segment intermédiaire (22) présente une deuxième branche (22.2) qui porte une deuxième tête sphérique (22.2a) qui est insérée de telle manière dans le deuxième évidement (15a.2) que ladite une paire de parois intérieures opposées guide la deuxième tête sphérique (22.2a) dans une deuxième direction perpendiculaire à la première direction, et l'autre paire de parois intérieure opposées guide la deuxième tête sphérique (22.2a) dans une deuxième direction perpendiculaire à la première direction, les deux directions étant agencées perpendiculairement à la direction prédéterminée dans laquelle le dispositif de mesure de force (14) mesure la force sur le membre (L1-L8).

9. Robot selon l'une des revendications 4 à 8. **caractérisé en ce que** le dispositif de mesure de force (14), en particulier le capteur de couple (17) est monté sans contrainte au moyen du premier levier (21.1), du deuxième levier (21.2), de la première branche (22.1) et/ou de la deuxième branche (22.2) de telle sorte qu'une force externe agissant sur le premier élément de structure et/ou sur le deuxième élément de structure entraîne uniquement une charge de torsion sur le dispositif de mesure de force (14) ou sur le capteur de couple (17), respectivement.

10. Robot selon l'une des revendications 1 à 9, **caractérisé en ce que** le dispositif de mesure de force (14) présente un capteur de couple (17) qui comprend une bride intérieure (18), une bride extérieure (19) et des entretoises de liaison (20) reliant la bride intérieure (18) avec la bride extérieure (19), lesquelles sont pourvues de capteurs de mesure, en particulier de capteurs extensiométriques, le capteur de couple (17) présentant un premier levier (21.1) relié à la bride extérieure (19), qui est relié au premier élément de structure (12) et un deuxième levier (21.2) relié à la bride extérieure (19), qui est relié au deuxième élément de structure (13).

11. Robot selon l'une des revendications 1 à 10, **caractérisé en ce que** le dispositif de mesure de force (14) présente un capteur de couple (17) qui comprend une bride intérieure (18), une bride extérieure (19) et des entretoises de liaison (20) reliant la bride intérieure (18) avec la bride extérieure (19), lesquelles sont pourvues de capteurs de mesure, en particulier de capteurs extensiométriques, le capteur de couple (17) présentant un premier levier (21.1) relié à la bride intérieure (18), qui est relié au premier élément de structure (12) et un deuxième levier (21.2) relié à la bride extérieure (19), qui est relié au deuxième élément de structure (13).

12. Robot selon la revendication 10 ou 11, **caractérisé en ce que** le premier levier (21.1) présente un tenon, en particulier un tenon à tête sphérique (23a), qui s'engage dans un évidement (24), en particulier un trou carré ou un alésage (24a) du premier élément de structure (12) ou d'une première barre articulée (25a), respectivement, et **en ce que** le deuxième levier (21.2) présente un tenon, en particulier un tenon à tête sphérique (23b) qui s'engage dans un évidement (24), en particulier un trou rectangulaire (24b) du deuxième élément de structure (13) ou d'une deuxième barre articulée (25b), respectivement.

13. Robot selon la revendication 10 ou 11, **caractérisé en ce que** le premier levier (21.1) présente un tenon, en particulier un tenon à tête sphérique (23a), qui s'engage dans un évidement (24), en particulier un trou carré ou un alésage (24a), du deuxième élément de structure (13) ou d'une deuxième barre articulée (25b) et **en ce que** le deuxième levier (21.2) comporte un tenon, en particulier un tenon à tète sphérique (23b), qui s'engage dans un évidement (24), en particulier un trou rectangulaire (24a) du premier élément de structure (12) ou d'une première barre articulée (25a), respectivement.

14. Robot selon l'une des revendications 1 à 13, **caractérisé en ce que** l'agencement de palier (15) est formé par le dispositif de mesure de force (14).
